# EUROPEAN PATENT APPLICATION

(11) **EP 4 815 388 A1**
(43) Date of publication of application: **30.09.2026**
(21) Application number: 24906166.4
(22) Date of filing: 09.12.2024
(51) Int. Cl.: H04L 41/0803

(54) **MODEL DEPLOYMENT METHOD AND COMMUNICATION APPARATUS**

(30) Priority: 21.12.2023 CN 202311777250
(71) Applicant: Huawei Technologies Co., Ltd., Shenzhen, Guangdong 518129 (CN)
(72) Inventor: HUANG, Xietian, Shenzhen, Guangdong 518129 (CN); SHI, Xiaoli, Shenzhen, Guangdong 518129 (CN); XU, Ruiyue, Shenzhen, Guangdong 518129 (CN)
(74) Representative: Isarpatent
(86) International application number: PCT/CN2024/137847
(87) International publication number: WO 2025/130683

(57) **Abstract**

This application provides a model deployment method and a communication apparatus, to facilitate deployment of a model group that can implement a joint inference function. The method includes: A first apparatus sends identification information of a target model group, where the target model group includes a plurality of models, and the plurality of models are jointly trained and/or jointly tested. Correspondingly, a second apparatus receives the identification information of the target model group, and deploys the target model group based on the identification information of the target model group.

## Description

This application claims priority to Chinese Patent Application No. 202311777250.1, filed with the China National Intellectual Property Administration on December 21, 2023 and entitled "MODEL DEPLOYMENT METHOD AND COMMUNICATION APPARATUS", which is incorporated herein by reference in its entirety.

### TECHNICAL FIELD

This application relates to the communication field, and in particular, to a model deployment method and a communication apparatus.

### BACKGROUND

To improve the intelligence level and the automation level of networks, artificial intelligence (artificial intelligence, AI) and machine learning (machine learning, ML) technologies are gradually being applied. For example, an access network device may include a type of service module (for example, an inference function) that implements functions by using an ML model, and the access network device may perform the corresponding function based on the ML model, thereby improving the intelligence level of the access network device.

Generally, each model can independently support a specific type of function. In some model deployment modes, one or more independent models may be deployed on a device (for example, the foregoing access network device) that requires model support. However, in practice, implementing a single function may require cooperation among a plurality of models. For example, the output of one model is used as the input of another model, forming a linked model sequence; a plurality of models may provide outputs in parallel; or the parallel outputs of a plurality of models may be combined and then used as the input of another model. In this way, a function can be implemented jointly by a plurality of models. The plurality of models may be jointly trained and/or jointly tested.

However, currently, there is no deployment mode for models that can jointly implement a function.

### SUMMARY

This application provides a model deployment method and a communication apparatus, to facilitate deployment of a model group that can implement a joint inference function.

According to a first aspect, this application provides a model deployment method. The method may be performed by a second apparatus or a component (for example, a chip or a chip system) in a second apparatus. The second apparatus has a capability of providing a model loading service. The second apparatus may be a network management system, an element management system, a network device, a radio access network device, or any other apparatus or system that can provide a model loading service. This is not specifically limited in this application. The method includes: receiving identification information of a target model group, where the target model group includes a plurality of models, and the plurality of models are jointly trained and/or jointly tested; and deploying the target model group based on the identification information of the target model group.

It should be understood that the purpose of model deployment is to enable a deployed model to be in an available state on an entity that implements an inference function. In a possible implementation, during model deployment, the entity that implements the inference function reads a description file of the model. The description file may be a description file for a capability of the model, and needs to be obtained based on identification information of the model. In existing model deployment modes, a plurality of models may be deployed. However, the plurality of models may be separately independently trained or independently tested, and joint inference cannot be implemented. In addition, even if the plurality of models are jointly trained and jointly tested, because the plurality of models are deployed independently based on respective model identifiers, only a description file of each model can be read, and a description file of a model group cannot be obtained, that is, a joint manner between the plurality of models cannot be obtained. In other words, the plurality of models can implement respective supported inference functions, but cannot implement a joint inference function.

In this embodiment of this application, in a process of deploying the target model group, the identification information of the target model group indicates that the target model group that has been jointly trained and/or jointly tested and that can jointly implement an inference function is to be deployed, so that a description file about the target model group can be obtained in the deployment process based on the identification information of the target model group. The description file may include a cooperation manner of the plurality of models in the target model group when jointly implementing the inference function. For example, the cooperation manner may be that the output of one model in the plurality of models is used as the input to another model, forming a mutually linked model sequence, or a plurality of models provide outputs in parallel, or parallel outputs of some models in the plurality of models are combined and then used as inputs of the remaining models. In this way, the plurality of models in the deployed target model group can implement joint inference based on the description file obtained in the deployment process. It can be learned that, according to the model deployment method provided in this application, the target model group that can jointly implement the inference function can be deployed, which helps the target model group implement joint inference.

With reference to the first aspect, in some implementations of the first aspect, the method further includes: sending first identification information and identification information of a first process, where the first identification information is associated with a message that carries the identification information of the target model group, the first identification information has a mapping relationship with the first process, and the first process is used to manage a deployment process of the target model group.

In a possible implementation, the identification information of the target model group is carried in a request message, and the first identification information may be identification information of a request instance created based on the request message.

In another possible implementation, the identification information of the target model group is carried in a configuration message, and the first identification information may be identification information of an instance created based on the configuration message.

With reference to the first aspect, in some implementations of the first aspect, first indication information is received, where the first indication information indicates a management mode for the deployment process of the target model group.

In a possible implementation, the first indication information indicates that the management mode for the deployment process of the target model group is batch management.

In another possible implementation, the management mode for the deployment process of the target model group is batch management by default. In other words, no explicit indication needs to be provided by either party, for example, the management mode may be agreed in a protocol.

It should be understood that the target model group includes a plurality of models, and "batch management" may be understood as deploying the plurality of models as a whole in a model deployment process.

With reference to the first aspect, in some implementations of the first aspect, when the management mode for the deployment process of the target model group is batch management, the first process corresponds to an overall deployment process of the target model group.

Optionally, the first process may correspond to one process instance. However, this is not limited in this application.

In this embodiment of this application, the overall deployment process of the target model group can be completed through one process, to help save resources and reduce energy consumption of the second apparatus.

With reference to the first aspect, in some implementations of the first aspect, the method further includes: sending first information, where the first information includes the first identification information and a status of the first process, or the identification information of the first process and a status of the first process, and the status includes: running, canceling, canceled, suspended, or finished.

In a possible implementation, the first information is actively reported by the second apparatus.

In another possible implementation, the first information is reported by the second apparatus in response to a request of the first apparatus. The method further includes: before sending the first information, receiving a request message that is used to request the status of the first process, where the request message includes the first identification information and the status of the first process, or the identification information of the first process and the status of the first process.

In this embodiment of this application, when the management mode in the model deployment process is batch management, the first identification information or the identification information of the first process may be both used to uniquely identify the overall deployment process of the target model group. When reporting the status of the first process, the second apparatus may indicate a correspondence between currently reported status information and a model deployment process based on the first identification information or the identification information of the first process. When one target model group is deployed and the target model group includes a plurality of models, the second apparatus may alternatively include status information of only one process when reporting the first information. This helps reduce signaling overheads between the second apparatus and an apparatus interacting with the second apparatus.

With reference to the first aspect, in some implementations of the first aspect, the method further includes: receiving second information, where the second information is used to control the overall deployment process of the target model group, the second information includes the first identification information and a control instruction for the first process, or the identification information of the first process and the control instruction, and the control instruction includes: cancel, suspend, or start.

In this embodiment of this application, when the management mode in the model deployment process is batch management, the overall deployment process of the target model group may be controlled by using one control instruction, to help improve model deployment efficiency.

With reference to the first aspect, in some implementations of the first aspect, the management mode for the deployment process of the target model group is independent management by default.

With reference to the first aspect, in some implementations of the first aspect, the first indication information indicates that the management mode for the deployment process of the target model group is independent management.

"Independent management" may be understood as performing deployment process management on an independent process created for each model included in the target model group.

With reference to the first aspect, in some implementations of the first aspect, the first process includes a plurality of processes, the plurality of processes are in a one-to-one correspondence with identification information of each of the plurality of models, the plurality of processes respectively correspond to deployment processes of the plurality of models, and the identification information of the first process includes a plurality of pieces of identification information corresponding to the plurality of processes.

With reference to the first aspect, in some implementations of the first aspect, the method further includes: sending third information, where the third information includes the first identification information, identification information of each model corresponding to all or part of the plurality of processes, and respective statuses of all or part of the processes; or identification information of all or part of processes, and respective statuses of all or part of the processes, where the status includes: running, canceling, canceled, suspended, or finished.

In a possible implementation, the third information is actively reported by the second apparatus.

In another possible implementation, the third information is reported by the second apparatus in response to a request of the first apparatus. The method further includes: before sending the third information, receiving a message used to request the statuses of all or part of the plurality of processes, where the message includes the first identification information and the identification information of each model corresponding to all or part of the plurality of processes; or the identification information of all or part of the processes.

With reference to the first aspect, in some implementations of the first aspect, the method further includes: receiving fourth information, where the fourth information is used to control deployment processes of all or part of the plurality of models, and the fourth information includes the first identification information, the identification information of each model in all or part of the models, and a control instruction for a deployment process of each model in all or part of the models; or identification information of a deployment process of each model in all or part of the models, and the control instruction.

In this embodiment of this application, in a model deployment mode with independent management, the first process may include a plurality of processes, the plurality of processes are in a one-to-one correspondence with identification information of each of the plurality of models, and the plurality of processes respectively correspond to deployment processes of the plurality of models. In this way, the first apparatus can separately obtain and control deployment statuses of the models in the target model group, to reflect different deployment statuses of the models. When some models in the target model group fail to be deployed, the models that fail to be deployed may be determined, and these models may be deployed again based on their identification information. There is no need to deploy an entire target model group again. This helps improve management accuracy and reduce unnecessary resource waste.

With reference to the first aspect, in some implementations of the first aspect, the identification information of the target model group is sent via a request message or a configuration message.

When the identification information of the target model group is sent via the request message, the request message may indicate to deploy the target model group. When the identification information of the target model group is sent via the configuration message, the configuration message may further include a deployment policy of the target model group.

Optionally, the deployment policy of the target model group may be a requirement for an inference capability of the target model group, or may be a parameter of each functional entity involved in a model deployment process, or the like. The deployment policy may be determined by the first apparatus, or may be reported by an entity that undertakes an inference function. This is not limited in this application. For example, the deployment policy may be that accuracy of the target model group is greater than 90%, or a preset time point or a preset periodicity of deploying the target model group is reached in terms of time, or it is detected that a network performance indicator is less than a preset threshold (for example, energy efficiency is less than 500 bits per joule). This is not specifically limited in this application.

With reference to the first aspect, in some implementations of the first aspect, the method further includes: receiving identification information of each model in the target model group.

In a possible implementation, the identification information of each model in the target model group is sent via a request message or a configuration message.

In another possible implementation, each functional entity participating in deployment of the target model group stores a mapping relationship between the identification information of the target model group and the identification information of each model in the target model group. In this way, after obtaining the identification information of the target model group, any party can locally search for the identification information of each model in the target model group based on the identification information of the target model group, or request the identification information of each model in the target model group from another entity.

According to a second aspect, this application provides another model deployment method. The method may be performed by a first apparatus or a component (for example, a chip or a chip system) in a first apparatus. The first apparatus has a capability of providing a model loading service. The first apparatus may be a network management system, an element management system, a network device, a radio access network device, or any other apparatus or system that has a capability of invoking a model loading service. This is not specifically limited in this application. The method includes: determining identification information of a target model group, where the target model group includes a plurality of models, and the plurality of models are jointly trained and/or jointly tested; and sending the identification information of the target model group.

Optionally, a manner in which the first apparatus determines the identification information of the target model group may include: The first apparatus determines, based on a requirement reported by a target inference functional entity, the identification information that is of the target model group and that corresponds to the requirement; or the first apparatus determines, based on a monitored running status of the target inference functional entity, the identification information of the target model group corresponding to a target inference function. This is not limited in this application.

Optionally, the identification information of the target model group may be locally stored in the first apparatus, or may be obtained by the first apparatus from another apparatus. This is not limited in this application.

With reference to the second aspect, in some implementations of the second aspect, the method further includes: receiving first identification information and identification information of a first process, where the first identification information is associated with a message that carries the identification information of the target model group, the first identification information has a mapping relationship with the first process, and the first process is used to manage a deployment process of the target model group.

With reference to the second aspect, in some implementations of the second aspect, the method further includes: sending first indication information, where the first indication information indicates a management mode for the deployment process of the target model group.

With reference to the second aspect, in some implementations of the second aspect, the management mode for the deployment process is batch management.

With reference to the second aspect, in some implementations of the second aspect, the management mode for the deployment process of the target model group is batch management by default.

With reference to the second aspect, in some implementations of the second aspect, the first process corresponds to an overall deployment process of the target model group.

With reference to the second aspect, in some implementations of the second aspect, the method further includes: receiving first information, where the first information includes the first identification information and a status of the first process, or the identification information of the first process and a status of the first process, and the status includes: running, canceling, canceled, suspended, or finished.

With reference to the second aspect, in some implementations of the second aspect, the method further includes: sending second information, where the second information is used to control the overall deployment process of the target model group, the second information includes the first identification information and a control instruction for the first process, or the identification information of the first process and the control instruction, and the control instruction includes: cancel, suspend, or start.

With reference to the second aspect, in some implementations of the second aspect, the management mode for the deployment process of the target model group is independent management by default.

With reference to the second aspect, in some implementations of the second aspect, the management mode for the deployment process is independent management.

With reference to the second aspect, in some implementations of the second aspect, the first process includes a plurality of processes, the plurality of processes are in a one-to-one correspondence with identification information of each of the plurality of models, the plurality of processes respectively correspond to deployment processes of the plurality of models, and the identification information of the first process includes a plurality of pieces of identification information corresponding to the plurality of processes.

With reference to the second aspect, in some implementations of the second aspect, the method further includes: receiving third information, where the third information includes the first identification information, identification information of each model corresponding to all or part of the plurality of processes, and respective statuses of all or part of the processes; or identification information of all or part of processes, and respective statuses of all or part of the processes, where the status includes: running, canceling, canceled, suspended, or finished.

With reference to the second aspect, in some implementations of the second aspect, the method further includes: sending fourth information, where the fourth information is used to control deployment processes of all or part of the plurality of models, and the fourth information includes the first identification information, the identification information of each model in all or part of the models, and a control instruction for a deployment process of each model in all or part of the models; or identification information of a deployment process of each model in all or part of the models, and the control instruction.

With reference to the second aspect, in some implementations of the second aspect, the identification information of the target model group is sent via a request message or a configuration message.

With reference to the second aspect, in some implementations of the second aspect, the method further includes: sending identification information of each model in the target model group.

According to a third aspect, this application provides a communication apparatus, including a module configured to perform the method according to any one of the first aspect or the second aspect.

According to a fourth aspect, this application provides another communication apparatus, including a processor. The processor is coupled to a memory and may be configured to execute instructions in the memory, to implement the method according to any possible implementation of the first aspect or the second aspect. Optionally, the apparatus further includes the memory. Optionally, the apparatus further includes a communication interface, and the processor is coupled to the communication interface.

According to a fifth aspect, a processor is provided. The processor includes an input circuit, an output circuit, and a processing circuit. The processing circuit is configured to receive a signal via the input circuit, and transmit the signal via the output circuit, so that the processor performs the method in any possible implementation of the first aspect or the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a processing apparatus is provided and includes a processor and a memory. The processor is configured to read instructions stored in the memory, and may receive a signal by using a receiver, and transmit a signal by using a transmitter, to perform the method in any possible implementation of the first aspect or the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus according to the sixth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a seventh aspect, a computer program product is provided. The computer program product includes a computer program (which may also be referred to as code or instructions). When the computer program is run, a computer is enabled to perform the method in any one possible implementation of the first aspect or the second aspect.

According to an eighth aspect, a computer-readable storage medium is provided. The computer-readable storage medium includes a computer program (which may also be referred to as code or instructions). When the computer program is run on a computer, the computer is enabled to perform the method in any possible implementation of the first aspect or the second aspect.

For beneficial effects and possible implementations of the third aspect to the eighth aspect, refer to the descriptions of the first aspect and the second aspect. Details are not described again.

### BRIEF DESCRIPTION OF DRAWINGS

FIG. 1 shows a model workflow according to an embodiment of this application;
FIG. 2 is a working diagram of a network resource model according to an embodiment of this application;
FIG. 3 is a working diagram of a network resource model according to an embodiment of this application;
FIG. 4 is a working diagram of another network resource model according to an embodiment of this application;
FIG. 5 is a diagram of a communication system to which an embodiment of this application is applicable;
FIG. 6 is a schematic flowchart of a model deployment method according to an embodiment of this application;
FIG. 7A and FIG. 7B are a schematic flowchart of another model deployment method according to an embodiment of this application;
FIG. 8A and FIG. 8B are a schematic flowchart of still another model deployment method according to an embodiment of this application;
FIG. 9A and FIG. 9B are a schematic flowchart of yet another model deployment method according to an embodiment of this application;
FIG. 10A and FIG. 10B are a schematic flowchart of a model deployment method according to an embodiment of this application;
FIG. 11 is a block diagram of a communication apparatus according to an embodiment of this application; and
FIG. 12 is a block diagram of another communication apparatus according to an embodiment of this application.

### DESCRIPTION OF EMBODIMENTS

The following describes technical solutions of this application with reference to accompanying drawings.

Before this application is described, the following several points are first described.

First, in embodiments below, terms and English acronyms and abbreviations, such as reference data or differential data, are examples provided for ease of description, and shall not constitute any limitation on this application. This application does not exclude a possibility of defining another term that can implement a same or similar function in an existing or a future protocol.

Second, in embodiments below, first, second, and various numbers are merely used for distinguishing for ease of description, and are not intended to limit the scope of embodiments of this application.

Third, "at least one" means one or more, and "a plurality of" means two or more. The term "and/or" describes an association relationship between associated objects, and indicates that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

To improve the intelligence level and the automation level of networks, artificial intelligence (artificial intelligence, AI) and machine learning (machine learning, ML) technologies are gradually applied to promote network intelligence.

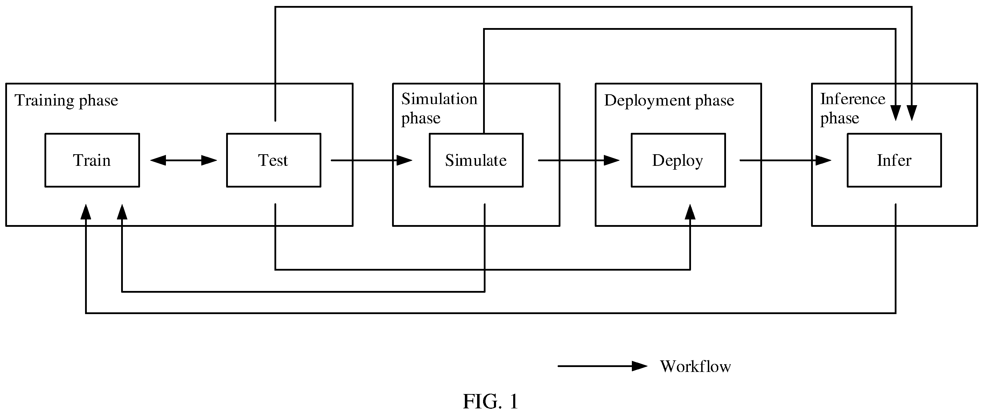

FIG. 1 shows an example of an AI/ML workflow, mainly including a training phase, a simulation phase, a deployment phase, and an inference phase. It should be understood that, generally, the AI/ML workflow is implemented in a sequence of the training phase (training phase), the simulation phase (emulation phase), the deployment phase (deployment phase), and the inference phase (inference phase). However, in some possible implementations, an AI/ML model may perform the inference phase after the training phase and/or the simulation phase, or skip the simulation phase after the training phase to perform the deployment phase and the inference phase, or enter the training phase after the simulation phase or the inference phase. The deployment phase is a process of loading a model to an inference function. In a possible implementation, after a model passes through the training phase and the simulation phase, the model is loaded to a corresponding inference function through the deployment phase, to enter the inference phase to perform an inference process.

In some examples, a role that provides an ML model loading (ML entity loading) management service (management service, MnS) is referred to as a producer (producer), and a role that invokes the ML model loading management service is referred to as a consumer (consumer). Two sub-cases and solutions for the two sub-cases are defined for the deployment phase.

The two sub-cases include:
Sub-case 1: The consumer requests the producer to perform model loading (consumer requested ML entity loading).
Sub-case 2: The consumer configures a policy for the producer, and the producer independently triggers model loading (control of producer-initiated ML entity loading).

The solutions for the two sub-cases are as follows:
A current solution defines three information object classes (information object classes, IOCs) including MLEntityLoadingRequest, MLEntityLoadingPolicy, and MLEntityLoadingProcess indicating an ML model loading process. MLEntityLoadingRequest and MLEntityLoadingProcess are applied to a scenario in the sub-case 1, and MLEntityLoadingPolicy and MLEntityLoadingProcess are applied to a scenario in the sub-case 2.

The following separately describes attributes of the foregoing three information object classes in detail.

### 1. MLEntityLoadingRequest<<IOC>>

MLEntityLoadingRequest<<IOC>> indicates an ML model loading request created by the consumer. The consumer requests the producer by using the IOC, to load an ML model to a target inference function. Attributes of the IOC are shown in Table 1.

**Table 1**

| Attribute name (attribute name) | Support qualifier (support qualifier) | Readable or not (isReadable) | Writable or not (isWritable) |
|---|---|---|---|
| requestStatus | M | T | T |
| cancelRequest | O | T | T |
| Attribute related to role (attribute related to role) | | | |
| mLEntityToLoadRef | M | T | F |

Herein, the requestStatus attribute indicates a status of a request, and a value of the requestStatus attribute may be any one of the following: not started (NOT_STARTED), loading in progress (LOADING_IN_PROGRESS), suspended (SUSPENDED), finished success (FINISHED_SUCCESS), finished failed (FINISHED_FAILED), or canceled (CANCELLED). The cancelRequest attribute indicates whether the consumer cancels the ML entity loading request. A value is true (TRUE) or false (FALSE). The attribute related to role mLEntityToLoadRef indicates an identifier of a model to be loaded for the ML model loading request created by the consumer.

Values of "Support qualifier", "Readable or not", and "Writable or not" in the foregoing table can be understood as follows: The value of "Support qualifier" includes mandatory (mandatory, M), optional (optional, O), and conditional mandatory (conditional mandatory, CM), where the value M indicates that the attribute is a mandatory attribute, the value O indicates that the attribute is an optional attribute, and the value CM indicates conditional mandatory, that is, the attribute is a mandatory attribute when a specific condition is met. The value of "Readable or not" includes true (TRUE, T) and false (FALSE, F), where the value being T indicates that the attribute is readable, and the value being F indicates that the attribute is not readable. The value of "Writable or not" also includes TRUE and FALSE, where the value being T indicates that the attribute is writable, and the value being F indicates that the attribute is not writable. The explanation is also applicable to the following tables. Details are not described again below.

### 2. MLEntityLoadingPolicy <<IOC>>

MLEntityLoadingPolicy<<IOC>> indicates an ML model loading policy set by the consumer for the producer. The consumer sets, by using the IOC, a condition for triggering ML model loading for the producer. The producer can trigger model loading only when an ML model meets the condition. Attributes of the IOC are shown in Table 2.

**Table 2**

| Attribute name (attribute name) | Support qualifier (support qualifier) | Readable or not (isReadable) | Writable or not (isWritable) |
|---|---|---|---|
| inferenceType | CM | T | T |
| mLEntityId | CM | T | T |
| policyForLoading | M | T | T |

The inferenceType attribute indicates an inference type of an initial model associated with the ML model loading policy set by the consumer for the producer. The attribute is a conditional mandatory attribute. In other words, the attribute is a mandatory attribute when the model associated with the ML model loading policy set by the consumer for the producer is an initial training model. It should be understood that the initial training model is a model that is trained for a first time, and no model identifier is allocated to the initial training model. Therefore, an inference type of the initial training model may be used to identify the model.

The mLEntityId attribute indicates an identifier of a retraining model corresponding to the ML model loading policy set by the consumer for the producer. The attribute is a conditional mandatory attribute. In other words, the attribute is a mandatory attribute when the model associated with the ML model loading policy set by the consumer for the producer is a retraining model. It should be understood that one mLEntityId may uniquely identify one model that has undergone initial training.

The policyForLoading attribute indicates the ML model loading policy set by the consumer for the producer. The policy may be a series of thresholds. For example, the policy may be that accuracy of the ML model is greater than 90%, or a preset time point or a preset periodicity is reached, or a specific network performance indicator is less than a preset threshold (for example, energy efficiency is less than 500 bits per joule).

### 3. MLEntityLoadingProcess<<IOC>>

MLEntityLoadingProcess<<IOC>> indicates the ML model loading process. In a scenario of the sub-case 1, the producer may instantiate one or more ML model loading processes for each ML model loading request of the consumer by using the IOC. In a scenario of the sub-case 2, the producer may instantiate one or more ML model loading processes by using the IOC, and associate the one or more ML model loading processes with the ML model loading policy set by the consumer for the producer. Attributes of the IOC are shown in Table 3.

**Table 3**

| Attribute name (attribute name) | Support qualifier (support qualifier) | Readable or not (isReadable) | Writable or not (isWritable) |
|---|---|---|---|
| progressStatus | M | T | F |
| cancelProcess | O | T | T |
| suspendProcess | O | T | T |
| resumeProcess | O | T | T |
| Attribute related to role (attribute related to role) | | | |
| MLEntityLoadingRequestRef | CM | T | F |
| MLEntityLoadingPolicyRef | CM | T | F |
| LoadedMLEntityRef | M | T | F |

The progressStatus attribute indicates a status of the ML model loading process. A value of the attribute may be any one of the following: running (RUNNING), canceling (CANCELLING), suspended (SUSPENDED), finished (FINISHED), or canceled (CANCELLED). The cancelProcess attribute indicates whether the consumer cancels the ML entity loading process. A value is true (TRUE) or false (FALSE). The suspendProcess attribute indicates whether the consumer suspends the ML entity loading process. A value is TRUE or FALSE. The resumeProcess attribute indicates whether the consumer resumes the ML entity loading process. A value is TRUE or FALSE.

The attribute related to role MLEntityLoadingRequestRef is a loading request identifier associated with the ML entity loading process. The attribute is a mandatory attribute when the ML entity loading process corresponds to the scenario of the sub-case 1. MLEntityLoadingPolicyRef is a loading policy identifier associated with the ML entity loading process. The attribute is a mandatory attribute when the ML entity loading process corresponds to the scenario of the sub-case 2. LoadedMLEntityRef is a model identifier associated with the ML entity loading process.

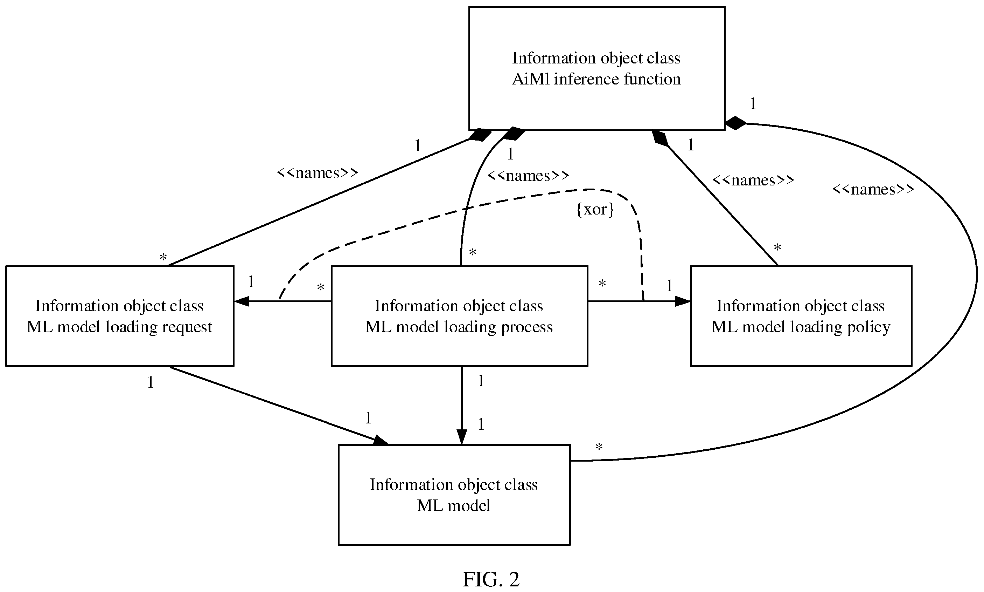

FIG. 2 shows an example of a diagram of a relationship between network resource models (network resource models, NRMs) of IOCs corresponding to Table 1, Table 2, and Table 3. As shown in FIG. 2, AiMlInferenceFunction indicates a function that can implement ML inference, and is also an IOC. In the figure, connection lines between an AiMlInferenceFunction object, and an MLEntityLoadingRequest object, an MLEntityLoadingProcess object, and an MLEntityLoadingPolicy object are solid rhombuses on a side of the AiMlInferenceFunction object. The solid rhombus indicates an inclusion relationship. In other words, the AiMlInferenceFunction object includes the MLEntityLoadingRequest object, the MLEntityLoadingProcess object, and the MLEntityLoadingPolicy object. Further, connection lines between an MLEntity object, and the MLEntityLoadingRequest object and the MLEntityLoadingProcess object are arrows on a side of the MLEntity object. The arrow indicates an association relationship. In other words, the MLEntityLoadingRequest object and the MLEntityLoadingProcess object are separately associated with the MLEntity object. Therefore, it may be further understood that the AiMlInferenceFunction object includes the MLEntity object. In the figure, it indicates that the connection line between the AiMlInferenceFunction object and the MLEntity object is a solid rhombus on the side of the AiMlInferenceFunction object.

In addition, numbers and symbols of connection lines between objects in the figure indicate a cardinality relationship between information object attributes with an inclusion relationship and an association relationship. For example, on a connection line between the MLEntityLoadingRequest object and the AiMlInferenceFunction object shown in FIG. 2, a cardinal number on the side of the MLEntityLoadingRequest object is "*", and a cardinal number on the side of the AiMlInferenceFunction object is "1". On the connection line between the MLEntityLoadingRequest object and the MLEntity object, cardinal numbers on two sides of the MLEntityLoadingRequest object and the MLEntity object are both "1". This indicates that one AiMlInferenceFunction object can include a plurality of MLEntityLoadingRequest objects, and each MLEntityLoadingRequest object can be associated with only one MLEntity object. A connection line rule of another connection line in FIG. 2 and a subsequent NRM diagram may also be explained according to the foregoing rule. Details are not described again.

In other words, when a model is loaded for an inference function, only one model can be loaded for one model loading request initiated by the consumer in the sub-case 1. Generally, each model can independently support a specific type of function. However, in practice, implementing a single function may require cooperation among a plurality of models. For example, the output of one model is used as the input of another model, forming a linked model sequence; a plurality of models may provide outputs in parallel; or the parallel outputs of a plurality of models may be combined and then used as the input of another model. In this way, a function can be implemented jointly by a plurality of models. The plurality of models may be jointly trained and/or jointly tested.

In the design of FIG. 2, although a plurality of models may be loaded by using a plurality of model loading requests, the plurality of models loaded by using the plurality of model loading requests may be separately independently trained or independently tested, and joint inference cannot be implemented. In addition, even if the plurality of models are jointly trained and jointly tested, because the plurality of models are deployed independently based on respective model identifiers, only a description file of each model can be read, and a joint manner between the plurality of models cannot be obtained. In other words, the plurality of models can implement respective supported inference functions, but cannot implement a joint inference function.

In view of this, this application provides a model deployment method and a communication apparatus. A target model group may be loaded for a target inference function. The target model group includes a plurality of jointly trained and/or jointly tested models. A description file about the target model group may be read based on identification information of the target model group in a deployment process. The description file may include a cooperation manner of the plurality of models in the target model group when an inference function is jointly implemented. In this way, the plurality of models in the deployed target model group may implement joint inference based on the description file obtained in the deployment process, so that the target model group that can support joint inference is deployed for the target inference function.

The following first describes in detail a design of the IOC provided in this application. There are the following two design manners.

Design 1:
1. Newly add an object that can be used to model a joint inference model group.

For example, the object may be MLEntityCoordinationGroup<<IOC>>. However, this is not limited in this application. MLEntityCoordinationGroup<<IOC>> may represent a target model group. The target model group may include a plurality of models that can be jointly trained and/or jointly tested to implement joint inference.

Optionally, the model may be an AI model or an ML model (which may also be referred to as an ML entity). This is not limited in this application. In subsequent descriptions of this application, only an example in which the model is an ML model is used. However, this example constitutes no limitation on this application.

It should be noted that one MLEntityCoordinationGroup is associated with at least two ML models.

In a possible implementation, attributes of MLEntityCoordinationGroup<<IOC>> are shown in Table 4.

**Table 4**

| Attribute related to role (attribute related to role) | Support qualifier (support qualifier) | Readable or not (isReadable) | Writable or not (isWritable) |
|---|---|---|---|
| memberMLEntityRefList | M | T | F |

Optionally, the attribute related to role memberMLEntityRefList in Table 4 may represent a model identifier list in a target model group. However, this is not specifically limited in this application. A model identifier in the target model group may alternatively be indicated in another form.

2. Add the following two attributes for a model loading request object created by the consumer.
Attribute 1: indicates a management mode (for example, batch management or independent management) in a model deployment process.

Attribute 2: indicates that the model loading request created by the consumer is used to request to deploy a target model group, and a plurality of models in the target model group may implement joint inference.

For example, the model loading request created by the consumer may be represented by MLEntityLoadingRequest<<IOC>>. Table 5 shows an example of attributes included in MLEntityLoadingRequest<<IOC>> provided in this embodiment of this application.

**Table 5**

| Attribute name (attribute name) | Support qualifier (support qualifier) | Readable or not (isReadable) | Writable or not (isWritable) |
|---|---|---|---|
| requestStatus | M | T | T |
| cancelRequest | O | T | T |
| groupBatchIndicator | O | T | T |
| Attribute related to role (attribute related to role) | | | |
| mLEntityToLoadRef | CM | T | F |
| mLEntityCoordinationGroupToLoadRef | CM | T | F |

In a possible implementation, the attribute 1 may be groupBatchIndicator, and the attribute may be an optional attribute. The management mode in the model deployment process may be indicated by groupBatchIndicator. For example, batch management is performed for the target model group, or independent management is performed for the plurality of models in the target model group. The attribute 2 may be an attribute related to role mLEntityCoordinationGroupToLoadRef. An identifier of the target model group that needs to be loaded for the ML model loading request created by the consumer is indicated by mLEntityCoordinationGroupToLoadRef. In addition, a support qualifier of mLEntityToLoadRef is changed to CM. In this way, when the model that needs to be loaded for the ML model loading request created by the consumer is not the target model group, mLEntityToLoadRef is a mandatory attribute. When the model that needs to be loaded for the ML model loading request created by the consumer is the target model group, mLEntityCoordinationGroupToLoadRef is a mandatory attribute. However, it should be understood that specific representation forms of the attribute 1 and the attribute 2 are not specifically limited in this application.

3. Add the following two attributes for a model loading policy object set by the consumer for the producer.

Attribute 3: indicates a management mode (for example, batch management or independent management) in a model deployment process.

Attribute 4: indicates that a model associated with the model loading policy set by the consumer for the producer is a target model group, and a plurality of models in the target model group may implement joint inference.

For example, the model loading policy set by the consumer for the producer may be represented by MLEntityLoadingPolicy<<IOC>>. Table 6 shows an example of attributes included in MLEntityLoadingPolicy<<IOC>> provided in this embodiment of this application.

**Table 6**

| Attribute name (attribute name) | Support qualifier (support qualifier) | Readable or not (isReadable) | Writable or not (isWritable) |
|---|---|---|---|
| inferenceType | CM | T | T |
| mLEntityId | CM | T | T |
| policyForLoading | M | T | T |
| groupBatchIndicator | O | T | T |
| Attribute related to role (attribute related to role) | | | |
| mLEntityCoordinationGroupToLoadRef | CM | T | F |

In a possible implementation, the attribute 3 may be groupBatchIndicator. The attribute may be an optional attribute. The management mode in the model deployment process may be indicated by groupBatchIndicator. The attribute 4 may be the attribute related to role mLEntityCoordinationGroupToLoadRef. An identifier of the target model group associated with the ML model loading policy set by the consumer for the producer is indicated by mLEntityCoordinationGroupToLoadRef. The attribute may be a conditional mandatory attribute. To be specific, when the model associated with the ML model loading policy set by the consumer for the producer is the target model group, mLEntityCoordinationGroupToLoadRef is a mandatory attribute. However, it should be understood that specific representation forms of the attribute 3 and the attribute 4 are not specifically limited in this application.

Optionally, a limitation on a value of the identifier of the retraining model corresponding to the model loading policy set by the consumer for the producer may be further modified. In a possible implementation, the identifier of the retraining model corresponding to the model loading policy set by the consumer for the producer may be represented by mLEntityId. As shown in FIG. 2, a value of mLEntityId is limited to 1, and one MLEntityLoadingPolicy object can be associated with only one MLEntity object. In a possible implementation of this design, a limitation on the value of mLEntityId is canceled, so that one MLEntityLoadingPolicy object can be associated with one or more MLEntity objects.

4. Add the following two attributes for a model loading process object.

Attribute 5: is used to associate the deployment process of the target model group.

Attribute 6: is used to associate deployment processes of a plurality of models in the target model group in the deployment process of the target model group.

Optionally, the model loading process may also be referred to as a model deployment process. This is not limited in this application.

For example, the model loading process object may be represented by MLEntityLoadingProcess<<IOC>>. Table 7 shows an example of attributes included in MLEntityLoadingProcess<<IOC>> provided in this embodiment of this application.

**Table 7**

| Attribute name (attribute name) | Support qualifier (support qualifier) | Readable or not (isReadable) | Writable or not (isWritable) |
|---|---|---|---|
| progressStatus | M | T | F |
| cancelProcess | O | T | T |
| suspendProcess | O | T | T |
| resumeProcess | O | T | T |
| Attribute related to role (attribute related to role) | | | |
| MLEntityLoadingRequestRef | CM | T | F |
| MLEntityLoadingPolicyRef | CM | T | F |
| LoadedMLEntityRef | M | T | F |
| LoadedMLEntityCoordinationGroupRef | CM | T | F |
| LoadedMemberMLEntityRef | CM | T | F |

In a possible implementation, the attribute 5 may be LoadedMLEntityCoordinationGroupRef, and the attribute is a conditional mandatory attribute. For example, when the model that needs to be correspondingly loaded in the sub-case 1 or the sub-case 2 is a target model group, LoadedMLEntityCoordinationGroupRef is a mandatory attribute. The attribute 6 may be LoadedMemberMLEntityRef. The attribute may also be a conditional mandatory attribute. For example, when the model that needs to be correspondingly loaded in the sub-case 1 or the sub-case 2 is a target model group, and the management mode in the model deployment process is independent management of the plurality of models in the target model group, the attribute is a mandatory attribute. However, it should be understood that specific forms of the attribute 5 and the attribute 6 are not limited in this application.

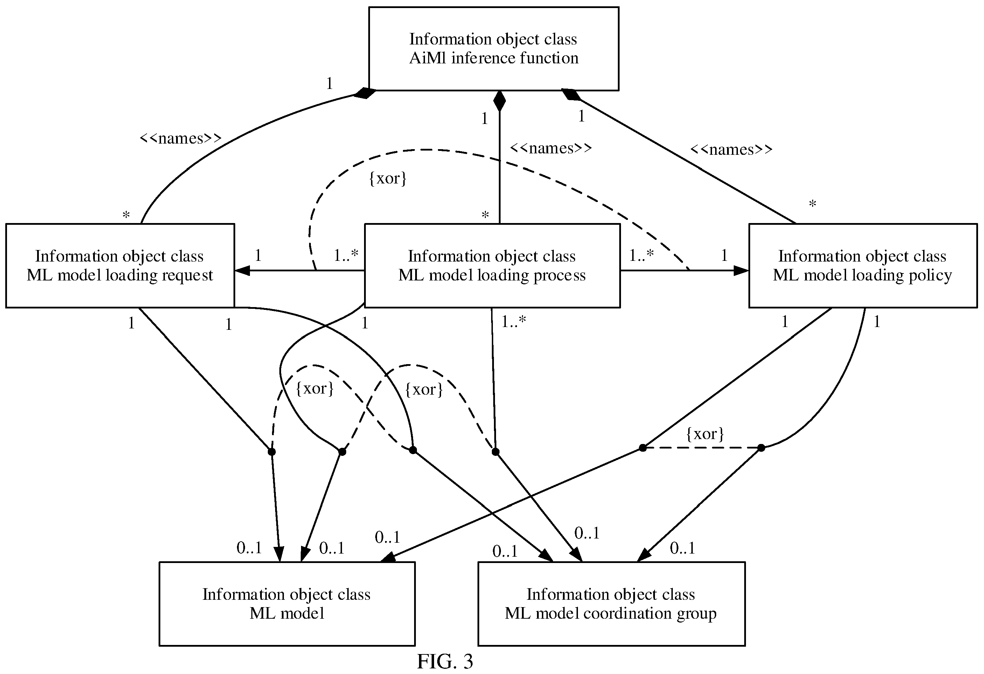

FIG. 3 shows an example of a relationship diagram of network resource models of IOCs corresponding to the design 1 according to an embodiment of this application. Compared with FIG. 2, FIG. 3 further includes an MLEntityCoordinationGroup object, and defines a cardinality relationship between the MLEntityCoordinationGroup object and each of the MLEntityLoadingRequest object, the MLEntityLoadingProcess object, and the MLEntityLoadingPolicy object.

On arrow lines pointing from the MLEntityLoadingRequest object to the MLEntityCoordinationGroup object and the MLEntity object, cardinal numbers are "1" on a side close to the MLEntityLoadingRequest object, and cardinal numbers are "0..1" on sides close to the MLEntityCoordinationGroup object and the MLEntity object. This indicates that one MLEntityLoadingRequest object may be associated with one MLEntityCoordinationGroup object, or one MLEntityLoadingRequest object may be associated with one MLEntity object.

On arrow lines pointing from the MLEntityLoadingPolicy object to the MLEntityCoordinationGroup object and the MLEntity object, cardinal numbers are "1" on a side close to the MLEntityLoadingPolicy object, and cardinal numbers are "0..1" on sides close to the MLEntityCoordinationGroup object and the MLEntity object. This indicates that one MLEntityLoadingPolicy object may be associated with one MLEntityCoordinationGroup object, or one MLEntityLoadingPolicy object may be associated with one MLEntity object.

On arrow lines pointing from the MLEntityLoadingProcess object to the MLEntityCoordinationGroup object and the MLEntity object, cardinal numbers are "0..1" on sides close to the MLEntityCoordinationGroup object and the MLEntity object. This indicates that an MLEntityLoadingProcess object may be associated with one MLEntityCoordinationGroup object, or an MLEntityLoadingProcess object may be associated with one MLEntity object. On the arrow line pointing from the MLEntityLoadingProcess object to the MLEntityCoordinationGroup object, a cardinal number is "1..*" on a side close to the MLEntityLoadingProcess object. This indicates that there may be at least one ("at least one" may also be described as "one or more") MLEntityLoadingProcess object when the MLEntityLoadingProcess object is associated with the MLEntityCoordinationGroup object. On the arrow line pointing from the MLEntityLoadingProcess object to the MLEntity object, a cardinal number is 1 on a side close to the MLEntityLoadingProcess object. This indicates that there is one MLEntityLoadingProcess object when the MLEntityLoadingProcess object is associated with the MLEntity object.

In addition, on an arrow line pointing from the MLEntityLoadingProcess object to the MLEntityLoadingPolicy object and an arrow line pointing from the MLEntityLoadingProcess object to the MLEntityLoadingRequest object, cardinal numbers are both changed from "*" (shown in FIG. 2) to "1..*" on the side close to the MLEntityLoadingProcess object. This indicates that there may be at least one MLEntityLoadingProcess object associated with one MLEntityLoadingPolicy object, and there may also be at least one MLEntityLoadingProcess object associated with one MLEntityLoadingRequest object.

In a possible implementation, based on the design 1, the target model group may be deployed for the inference function by associating one MLEntityLoadingRequest object with one MLEntityCoordinationGroup object, or by associating one MLEntityLoadingPolicy object with one MLEntityCoordinationGroup object.

Design 2:
1. Modify the model loading request object created by the consumer.
   (1) Modify a value of an identifier of a model that needs to be loaded by using the model loading request created by the consumer.
   (2) Newly add an attribute 7 that indicates that the model loading request created by the consumer is used to request to deploy a target model group, and a plurality of models in the target model group may implement joint inference.
   (3) Newly add an attribute 8 that indicates a management mode (for example, batch management or independent management) in a model deployment process.

For example, the model loading request created by the consumer may be represented by MLEntityLoadingRequest<<IOC>>. Table 8 shows an example of attributes included in another MLEntityLoadingRequest<<IOC>> provided in this embodiment of this application.

**Table 8**

| Attribute name (attribute name) | Support qualifier (support qualifier) | Readable or not (isReadable) | Writable or not (isWritable) |
|---|---|---|---|
| requestStatus | M | T | T |
| cancelRequest | O | T | T |
| mLEntityGroupInfo | CM | T | T |
| groupBatchIndicator | O | T | T |
| Attribute related to role (attribute related to role) | | | |
| mLEntityToLoadRef | M | T | F |

In a possible implementation, the identifier of the model that needs to be loaded by using the model loading request created by the consumer may be represented by mLEntityToLoadRef. As shown in FIG. 2, a value of mLEntityToLoadRef is limited to 1, and one MLEntityLoadingRequest object can be associated with only one MLEntity object. In a possible implementation of this design, a limitation on the value of mLEntityToLoadRef is canceled, that is, one MLEntityLoadingRequest object can be associated with one or more MLEntity objects. In addition, the newly added attribute 7 indicates that mLEntityToLoadRef corresponding to one or more MLEntity objects associated with one MLEntityLoadingRequest object belongs to a target model group that can implement a joint inference function. In this way, when the model that needs to be loaded by using the ML model loading request created by the consumer is the target model group, the attribute 7 is a mandatory attribute. Optionally, the attribute 7 may be represented by mLEntityGroupInfo. However, this is not limited in this application.

In a possible implementation, the attribute 8 may be groupBatchIndicator, and the attribute may be an optional attribute. The management mode in the model deployment process may be indicated by groupBatchIndicator. For example, the management mode may be batch management for the target model group, or independent management for the plurality of models in the target model group. However, this is not specifically limited in this application.

2. Modify the model loading policy object set by the consumer for the producer.
(1) Modify the value of the identifier of the retraining model corresponding to the model loading policy set by the consumer for the producer.
(2) Newly add an attribute 9 that indicates that the model loading request created by the consumer is used to request to deploy a target model group, and a plurality of models in the target model group may implement joint inference.
(3) Newly add an attribute 10 that indicates a management mode (for example, batch management or independent management) in a model deployment process.

For example, the model loading policy set by the consumer for the producer may be represented by MLEntityLoadingPolicy<<IOC>>. Table 9 shows an example of attributes included in another MLEntityLoadingPolicy<<IOC>> provided in this embodiment of this application.

**Table 9**

| Attribute name (attribute name) | Support qualifier (support qualifier) | Readable or not (isReadable) | Writable or not (isWritable) |
|---|---|---|---|
| inferenceType | CM | T | T |
| mLEntityId | CM | T | T |
| policyForLoading | M | T | T |
| mLEntityGroupInfo | CM | T | T |
| groupBatchIndicator | O | T | T |

In a possible implementation, the identifier of the retraining model corresponding to the model loading policy set by the consumer for the producer may be represented by mLEntityId. As shown in FIG. 2, a value of mLEntityId is limited to 1, and one MLEntityLoadingPolicy object can be associated with only one MLEntity object. In a possible implementation of this design, a limitation on the value of mLEntityId is canceled, so that one MLEntityLoadingPolicy object can be associated with one or more MLEntity objects. In addition, the newly added attribute 9 indicates that mLEntityId corresponding to one or more MLEntity objects associated with one MLEntityLoadingPolicy object belongs to a target model group that can implement a joint inference function. In this way, when the model associated with the ML model loading policy set by the consumer for the producer is the target model group, the attribute 9 is a mandatory attribute. Optionally, the attribute 9 may be represented by mLEntityGroupInfo. However, this is not limited in this application.

In a possible implementation, the attribute 10 may be groupBatchIndicator, and the attribute may be an optional attribute. The management mode in the model deployment process may be indicated by groupBatchIndicator. For example, the management mode may be batch management for the target model group, or independent management for the plurality of models in the target model group. However, this is not specifically limited in this application.

3. Modify the model loading process object: modify a value of a model identifier associated with a loading process.

For example, the model loading process object may be represented by MLEntityLoadingProcess<<IOC>>. Table 10 shows an example of attributes included in MLEntityLoadingProcess<<IOC>> provided in this embodiment of this application.

**Table 10**

| Attribute name (attribute name) | Support qualifier (support qualifier) | Readable or not (isReadable) | Writable or not (isWritable) |
|---|---|---|---|
| progressStatus | M | T | F |
| cancelProcess | O | T | T |
| suspendProcess | O | T | T |
| resumeProcess | O | T | T |
| Attribute related to role (attribute related to role) | | | |
| MLEntityLoadingRequestRef | CM | T | F |
| MLEntityLoadingPolicyRef | CM | T | F |
| LoadedMLEntityRef | M | T | F |

In a possible implementation, the model identifier associated with the loading process may be represented by LoadedMLEntityRef. In some examples, a value of LoadedMLEntityRef is limited to 1. In other words, one MLEntityLoadingProcess object corresponds to only one LoadedMLEntityRef. In a possible implementation of this design, a limitation on a value of LoadedMLEntityRef is canceled, so that one MLEntityLoadingProcess object can correspond to one or more LoadedMLEntityRefs. For example, when the management mode for the deployment process is batch management, one MLEntityLoadingProcess object may correspond to a plurality of LoadedMLEntityRefs. In this case, the plurality of LoadedMLEntityRefs respectively correspond to identification information of the plurality of models in the target model group. When the management mode for the deployment process is independent management, one MLEntityLoadingProcess object may correspond to one LoadedMLEntityRef. In this case, LoadedMLEntityRef corresponds to identification information of one model in the target model group. However, this is not limited in this application. Optionally, the model in the target model group may also be referred to as a submodel in the target model group. This is not limited in this application.

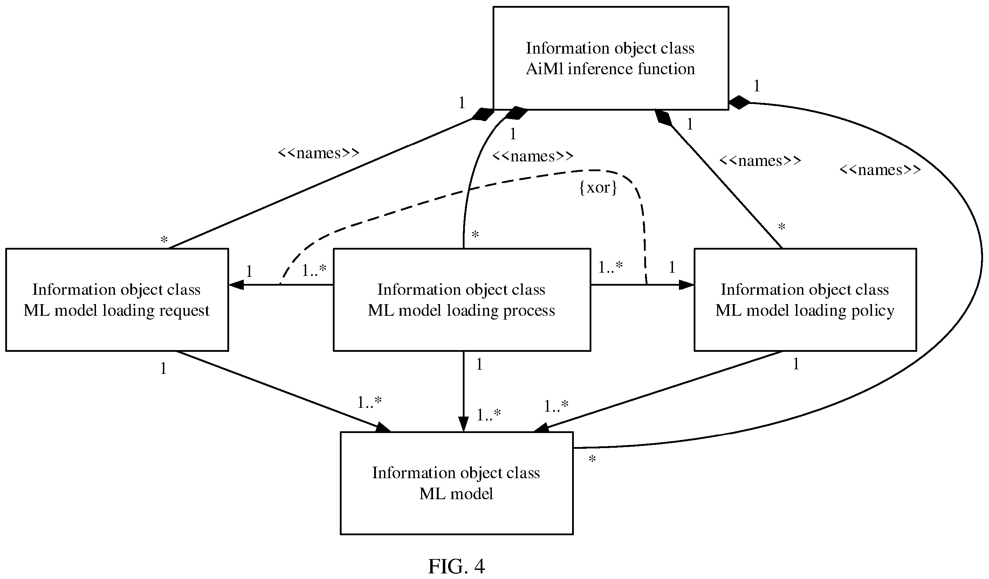

FIG. 4 shows an example of a relationship diagram of network resource models of IOCs corresponding to the design 2 according to an embodiment of this application. As shown in FIG. 4, on an arrow line pointing from an MLEntityLoadingRequest object to an MLEntity object, a cardinal number is "1" on a side close to the MLEntityLoadingRequest object, and a cardinal number is "1..*" on a side close to the MLEntity object. This indicates that one MLEntityLoadingRequest object may be associated with at least one MLEntity object. On an arrow line pointing from an MLEntityLoadingPolicy object to an MLEntity object, a cardinal number is "1" on a side close to the MLEntityLoadingPolicy object, and a cardinal number is "1..*" on the side close to the MLEntity object. This indicates that one MLEntityLoadingPolicy object may be associated with at least one MLEntity object. On an arrow line pointing from an MLEntityLoadingProcess object to the MLEntity object, a cardinal number is "1" on a side close to the MLEntityLoadingProcess object, and a cardinal number is "1..*" on the side close to the MLEntity object. This indicates that one MLEntityLoadingProcess object may be associated with at least one MLEntity object.

In addition, on an arrow line pointing from the MLEntityLoadingProcess object to the MLEntityLoadingPolicy object and an arrow line pointing from the MLEntityLoadingProcess object to the MLEntityLoadingRequest object, cardinal numbers are both changed from "*" (shown in FIG. 2) to "1..*" on the side close to the MLEntityLoadingProcess object. This indicates that there may be at least one MLEntityLoadingProcess object associated with one MLEntityLoadingPolicy object, and there may also be at least one MLEntityLoadingProcess object associated with one MLEntityLoadingRequest object.

In a possible implementation, based on the design 2, the target model group may be deployed for the inference function by associating one MLEntityLoadingRequest object with at least one MLEntity object, or by associating one MLEntityLoadingPolicy object with at least one MLEntity object. When the target model group is deployed, a quantity of the at least one MLEntity object may be greater than or equal to two.

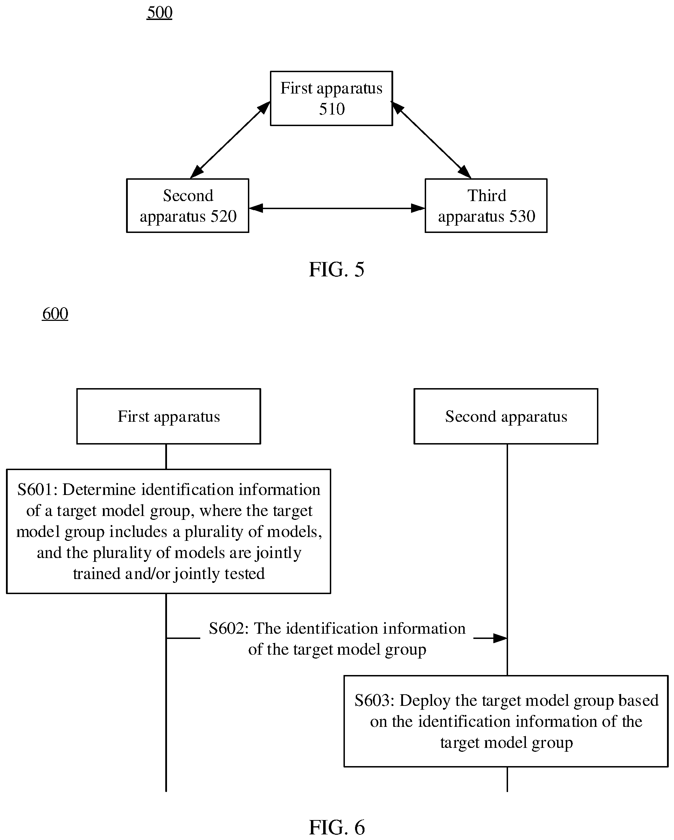

FIG. 5 is a diagram of a communication system 500 to which an embodiment of this application is applicable. As shown in FIG. 5, the communication system 500 includes a first apparatus 510, a second apparatus 520, and a third apparatus 530. Communication may be established between the first apparatus 510, the second apparatus 520, and the third apparatus 530.

In a possible implementation, a role of the first apparatus 510 may be a model loading consumer (ML loading consumer) that may invoke a model loading service, a role of the second apparatus 520 may be a model loading producer (ML loading producer) that may provide a model loading service, and the third apparatus 530 may be a role that implements a model inference function (ML inference) (which may also be understood as an inference function owner, an inference function executor, or an inference result obtainer, where the role may be directly referred to as an inference function in some examples). However, this is not specifically limited in this application.

It should be understood that in the communication system shown in FIG. 5, there may be one or more first apparatuses, second apparatuses, or third apparatuses. This is not limited in this application.

In a possible scenario, the first apparatus 510 may invoke the model loading service provided by the second apparatus 520, to indicate to load a target model to the specified third apparatus 530; and the third apparatus 530 is responsible for inputting data into the model to obtain corresponding output.

In a possible implementation, the first apparatus 510 (or the second apparatus 520, or the third apparatus 530) may include one or more of the following: a module that can implement a function corresponding to the model loading consumer, a module that can implement a function corresponding to the model loading producer, or a module that can implement the inference function based on the model. This is not specifically limited in this application.

Optionally, the first apparatus 510 may be a network management system (network management system, NMS), an element management system (element management system, EMS), a radio access network (radio access network, RAN) device, or any other apparatus or system that can be used as a model loading consumer. This is not specifically limited in this application.

Optionally, the second apparatus 520 may be a network management system, an element management system, or a radio access network device, or any other apparatus or system that can be used as a model loading producer. This is not specifically limited in this application.

Optionally, the third apparatus 530 may be a network management system, an element management system, or a radio access network device, or any other apparatus or system that can implement an inference function based on a model. This is not specifically limited in this application.

Optionally, the element management system may manage a network and be responsible for network running, management, and function maintenance; and may also be referred to as a cross-domain management system. This is not limited in this application.

Optionally, the element management system may be used to manage one or more network elements of a specific type, and may also be referred to as a domain management system or a single-domain management system. This is not limited in this application.

Optionally, the access network device may be a transmission reception point (transmission reception point, TRP), an evolved NodeB (evolved NodeB, eNB, or eNodeB) in a long term evolution (long term evolution, LTE) system, a home NodeB (for example, a home evolved NodeB, or a home NodeB, HNB), a baseband unit (base band unit, BBU), or a radio controller in a cloud radio access network (cloud radio access network, CRAN) scenario. Alternatively, the access network device may be a relay station, an access point, an in-vehicle device, a wearable device, an access network device in a 5G network, an access network device in a future evolved public land mobile network (public land mobile network, PLMN), an access point (access point, AP) in a wireless local area network (wireless local area network, WLAN), a gNB in a new radio (new radio, NR) system, a satellite base station in a satellite communication system, or the like. This is not limited in embodiments of this application.

Optionally, the access network device may include a central unit (central unit, CU) node, a distributed unit (distributed unit, DU) node, an access network device including a CU node and a DU node, or an access network device including a CU-control plane node (CU-CP node), a CU-user plane node (CU-UP node), and a DU node. The access network device including the CU node and the DU node may split protocol layers of the access network device. Some functions of the protocol layers are centrally controlled by a CU, and remaining functions or all functions of the protocol layers are distributed in a DU, and the CU centrally controls the DU. In an implementation, a radio resource control (radio Resource Control, RRC) layer, a packet data convergence protocol (packet data convergence protocol, PDCP) layer, and a service data adaptation protocol (service data adaptation protocol, SDAP) layer in a protocol stack are deployed on a CU. A radio link control (radio link control, RLC) layer, a media access control (media access control, MAC) layer, and a physical layer (physical layer, PHY) in the protocol stack are deployed on a DU. Therefore, the CU has RRC, PDCP, and SDAP processing capabilities. The DU has RLC, MAC, and PHY processing capabilities. The foregoing function division is merely an example, and does not constitute a limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different functional entities. The CU-CP and the CU-UP may be coupled to the DU to jointly implement a function of an access network device. In a possible manner, the CU-CP is responsible for a control plane function, and mainly includes RRC and PDCP-C. PDCP-C is mainly responsible for encryption and decryption of control plane data, integrity protection, data transmission, and the like. The CU-UP is responsible for a user plane function, mainly including SDAP and PDCP-U. The SDAP is mainly responsible for processing data of a core network device and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP represents that the access network device is connected to the core network device via an interface between the core network device and the access network device, and is connected to the DU through F1-C (control plane). The CU-UP is connected to the DU through F1-U (user plane). In addition, in another possible implementation, the PDCP-C is also in the CU-UP. This is not limited in this application.

To make the objectives and technical solutions of this application clearer and more intuitive, the following describes in detail the model deployment method and the communication apparatus provided in embodiments of this application with reference to the accompanying drawings and the embodiments. It should be understood that specific embodiments described herein are merely used to explain this application but are not intended to limit this application.

The following first describes in detail a model deployment method provided in an embodiment of this application with reference to FIG. 6 to FIG. 10B.

The model deployment method provided in this embodiment of this application may be implemented based on the foregoing two designs for the IOC provided in this application. The method may be applied to the communication system 500 shown in FIG. 5 or another communication system. This is not limited in this application. For example, in this embodiment of this application, the model deployment method provided in this application is described from a perspective of interaction between apparatuses by using an example in which a role of a first apparatus is a consumer, a role of a second apparatus is a producer, and a third apparatus is a role for implementing an inference function based on a model.

FIG. 6 is a schematic flowchart of a model deployment method 600 according to an embodiment of this application. The method 600 includes the following steps.

S601: A first apparatus determines identification information of a target model group, where the target model group includes a plurality of models, and the plurality of models are jointly trained and/or jointly tested.

It should be noted that the model in this application may be a machine learning model (machine learning model, ML model), or may be embodied in a form of an entity, for example, a machine learning entity (machine learning entity, ML entity). This is not limited in this application.

S602: The first apparatus sends the identification information of the target model group. Correspondingly, a second apparatus receives the identification information of the target model group.

S603: The second apparatus deploys the target model group based on the identification information of the target model group.

It should be noted that the second apparatus deploying the target model group may be understood as the second apparatus loading the target model group to one or more target inference functions (for example, a third apparatus or a gNB mentioned below). The target model group is used to perform inference.

In this embodiment of this application, in a process in which the second apparatus deploys the target model group, the identification information of the target model group indicates that the target model group that has been jointly trained and/or jointly tested and that can jointly implement an inference function is to be deployed, so that a description file about the target model group can be obtained in the deployment process based on the identification information of the target model group. The description file may include a cooperation manner of the plurality of models in the target model group when jointly implementing the inference function. For example, the cooperation manner may be that the output of one model in the plurality of models is used as the input to another model, forming a mutually linked model sequence, or a plurality of models provide outputs in parallel, or parallel outputs of some models in the plurality of models are combined and then used as inputs of the remaining models. In this way, the plurality of models in the deployed target model group can implement joint inference based on the description file obtained in the deployment process. It can be learned that, according to the model deployment method provided in this application, the target model group that can jointly implement the inference function can be deployed, which helps the target model group implement joint inference.

In a possible scenario, an objective of determining the identification information of the target model group by the first apparatus in S601 is to deploy the target model group for the third apparatus, to implement a target inference function on the third apparatus. For example, a manner in which the first apparatus determines the identification information of the target model group may include: The first apparatus determines, based on a requirement reported by the third apparatus, the identification information of the target model group corresponding to the target inference function required by the third apparatus; or the first apparatus determines, based on a monitored running status of the third apparatus, the identification information of the target model group corresponding to the target inference function required by the third apparatus. This is not limited in this application. Optionally, the identification information of the target model group may be locally stored in the first apparatus, or may be obtained by the first apparatus from another apparatus. This is not limited in this application.

It should be understood that a purpose of model deployment is to enable a deployed model to be in an available state on an entity with an inference function (for example, the third apparatus). A possible implementation of S603 may be as follows: The second apparatus deploys the target model group for one or more third apparatuses based on the identification information of the target model group. In some examples, the second apparatus sends a second indication message to the third apparatus, where the indication message indicates the third apparatus to activate the existing target model group, and the indication message may include identification information of the target model group. In some other examples, the second apparatus sends a third indication message to the third apparatus, where the indication message indicates the third apparatus to download and activate the target model group, and the indication message may include the identification information of the target model group and a storage address of the target model group.

In an optional embodiment, after S602, the method 600 further includes: The second apparatus sends first identification information and identification information of a first process, where the first identification information is associated with a message that carries the identification information of the target model group, the first identification information has a mapping relationship with the first process, and the first process is used to manage a deployment process of the target model group. Correspondingly, the first apparatus receives the first identification information and the identification information of the first process.

Optionally, the first identification information and the identification information of the first process may be sent via a response message. The response message may be a response to a message that carries the identification information of the target model group. However, this is not limited in this application.

It should be understood that this embodiment of this application is applicable to scenarios corresponding to the two foregoing mentioned sub-cases defined in the model deployment phase. In different scenarios, the identification information of the target model group may be carried by using different types of messages. Therefore, the first identification information has different meanings in different scenarios.

Scenario 1: a scenario corresponding to the sub-case 1 mentioned above. In a possible implementation of this scenario, the identification information of the target model group in S601 is sent by the first apparatus by using a request message, and the request message is used to request the second apparatus to deploy the target model group for the third apparatus.

It should be understood that, in this scenario, the first apparatus determines, based on a deployment policy of the target model group, an occasion for sending the request message to the second apparatus. The deployment policy may be a requirement on an inference capability of the target model group, or may be a parameter of each functional entity involved in the model deployment process. The deployment policy may be determined by the first apparatus, or may be reported by the third apparatus. This is not limited in this application. For example, the deployment policy may be that accuracy of the target model group is greater than 90%, or a preset time point or a preset periodicity of deploying the target model group is reached in terms of time, or it is detected that a network performance indicator of the third apparatus is less than a preset threshold (for example, energy efficiency is less than 500 bits per joule). This is not specifically limited in this application.

In a possible implementation, when the first apparatus determines that the target model group and/or the third apparatus have/has met a condition corresponding to the deployment policy, the first apparatus sends a request message to the second apparatus, where the request message is used to request to deploy the target model group, and the request message includes the identification information of the target model group. Correspondingly, the second apparatus receives the request message, and creates an instance of the request message and an instance of the first process.

In some possible implementations, the request message further includes identification information of each model in the target model group.

It should be understood that the first process is used to manage the deployment process of the target model group. The first process may be referred to as a deployment process of the target model group or a loading process of the target model group. A specific name of the first process is not specifically limited in this application. In addition, "loading" and "deployment" described in embodiments of this application may be understood as a same meaning unless otherwise specified, and are not repeatedly explained subsequently.

In this scenario, an IOC and attributes corresponding to the request message may be shown in the following two examples:

In a first example, the request message may correspond to the MLEntityLoadingRequest object described in the design 1. The MLEntityLoadingRequest object is associated with the MLEntityCoordinationGroup object to indicate that the request message requests to deploy a model group. A value of the attribute related to role mLEntityCoordinationGroupToLoadRef of the MLEntityLoadingRequest object may indicate the identification information of the target model group.

Optionally, the identification information of each model in the target model group may be indicated by a value of the attribute related to role memberMLEntityRefList of the MLEntityCoordinationGroup object associated with the MLEntityLoadingRequest object.

Correspondingly, the first process may be a process created based on the MLEntityLoadingProcess object described in the design 1, the request message may be identified by using a value of the attribute related to role MLEntityLoadingRequestRef of the MLEntityLoadingProcess object, and the identification information of the target model group corresponding to the first process may be represented by using a value of the attribute related to role LoadedMLEntityCoordinationGroupRef of the MLEntityLoadingProcess object.

In a second example, the request message may correspond to the MLEntityLoadingRequest object described in the design 2. The attribute mLEntityGroupInfo of the MLEntityLoadingRequest object indicates that the request message requests to deploy the target model group. A value of mLEntityGroupInfo may indicate the identification information of the target model group.

Optionally, the identification information of each model in the target model group may be correspondingly represented by using a plurality of values of the attribute related to role mLEntityToLoadRef of the MLEntityLoadingRequest object.

Correspondingly, the first process may be a process created based on the MLEntityLoadingProcess object described in the design 2, the request message may be identified by using a value of the attribute related to role MLEntityLoadingRequestRef of the MLEntityLoadingProcess object, and the identification information of the target model group or identification information of a plurality of models in the target model group may be correspondingly represented by using one or more values of the attribute LoadedMLEntityRef of the MLEntityLoadingProcess object.

In the two examples corresponding to the scenario 1, an instance of the request message may be an MLEntityLoadingRequest instance, the first identification information may be an identifier of the MLEntityLoadingRequest instance, an instance of the first process may be an MLEntityLoadingProcess instance, and the identification information of the first process may be an identifier of the MLEntityLoadingProcess instance.

Scenario 2: a scenario corresponding to the sub-case 2 mentioned above. In a possible implementation of this scenario, the identification information of the target model group in S601 is sent by the first apparatus by using a configuration message, and the configuration message further includes the deployment policy of the target model group.

In a possible implementation, the first apparatus sends the identification information of the target model group and the deployment policy of the target model group to the second apparatus by using a configuration message. After receiving the identification information of the target model group and the deployment policy of the target model group, the second apparatus creates an instance of the configuration message, and creates an instance of the first process after determining that the target model group and/or the third apparatus have/has met the condition corresponding to the deployment policy.

In a possible implementation, the configuration message further includes the identification information of each model in the target model group.

Optionally, the first apparatus may send the identification information of the target model group and the deployment policy of the target model group by using one configuration message, or may send the identification information of the target model group and the deployment policy of the target model group respectively by using two configuration messages. A quantity of configuration messages, content of the configuration message, and a sequence of configuration messages are not limited in this application.

Optionally, the deployment policy of the target model group in this scenario may be that accuracy of the target model group is greater than 90%, or a preset time point or a preset periodicity of deploying the target model group is reached in terms of time, or it is detected that a network performance indicator of the third apparatus is less than a preset threshold (for example, energy efficiency is less than 500 bits per joule). This is not specifically limited in this application.

In this scenario, an IOC and attributes corresponding to the configuration message may be shown in the following two examples:

In a first example, the configuration message may correspond to the MLEntityLoadingPolicy object described in the design 1. The MLEntityLoadingPolicy object may be associated with the MLEntityCoordinationGroup object to indicate that the deployment policy included in the configuration message corresponds to deployment of the target model group. A value of the attribute related to role mLEntityCoordinationGroupToLoadRef of the MLEntityLoadingPolicy object may indicate the identification information of the target model group. The attribute policyForLoading may be used to identify the deployment policy of the target model group.

In a possible implementation, the identification information of each model in the target model group is indicated by a value of the attribute related to role memberMLEntityRefList of the MLEntityCoordinationGroup object associated with the MLEntityLoadingPolicy object.

In another possible implementation, the identification information of the plurality of models in the target model group is correspondingly indicated by a plurality of values of the mLEntityId attribute of the MLEntityLoadingPolicy object.

Correspondingly, the first process may be a process created based on the MLEntityLoadingProcess object described in the design 1, the configuration message may be identified by using a value of the attribute related to role MLEntityLoadingPolicyRef of the MLEntityLoadingProcess object, and the identification information of the target model group may be represented by using a value of the attribute related to role LoadedMLEntityCoordinationGroupRef of the MLEntityLoadingProcess object.

In a second example, the configuration message may correspond to the MLEntityLoadingPolicy object described in the design 2, the identification information of the target model group is represented by using a value of the attribute mLEntityGroupInfo of the MLEntityLoadingPolicy object, and the deployment policy of the target model group may be identified by using the attribute policyForLoading.

Optionally, the identification information of the plurality of models in the target model group may be correspondingly indicated by the plurality of values of the mLEntityId attribute.

Correspondingly, the first process is a process created based on the MLEntityLoadingProcess object described in the design 2, the configuration message may be identified by using a value of the attribute related to role MLEntityLoadingPolicyRef of the MLEntityLoadingProcess object, and the identification information of the plurality of models in the target model group may correspond to a plurality of values of the attribute LoadedMLEntityRef of the MLEntityLoadingProcess object.

In the two examples corresponding to the scenario 2, an instance of the configuration message may be an MLEntityLoadingPolicy instance, the first identification information may be an identifier of the MLEntityLoadingPolicy instance, an instance of the first process may be an MLEntityLoadingProcess instance, and the identification information of the first process may be an identifier of the MLEntityLoadingProcess instance.

The first process in the two scenarios is used to manage the deployment process of the target model group. Optionally, the management mode for the deployment process of the target model group may include two manners: "batch management" and "independent management". However, this is not specifically limited in this application. Meanings of the first process are different in different management modes of the deployment process. The following uses "batch management" and "independent management" as examples for detailed description.

### First manner: batch management

The target model group includes a plurality of models, and "batch management" may be understood as entirely deploying the plurality of models as a whole in the model deployment process. To be specific, models in the trained/tested model group are all deployed/loaded to the target inference function. In this case, the first process corresponds to an overall deployment process of the target model group. For example, the second apparatus creates one MLEntityLoadingProcess instance to manage the deployment process of the target model group.

It should be understood that the MLEntityLoadingProcess instance has a status attribute progressStatus, and a value of the attribute may be any one of the following: running (RUNNING), canceling (CANCELLING), suspended (SUSPENDED), finished (FINISHED), or canceled (CANCELLED). When a value of progressStatus of MLentityLoadingProcess is running (RUNNING), it may be understood as that the model deployment process is running. Therefore, RUNNING may also be understood as "deploying" or "loading". This is not limited in this application.

For example, when creating the MLEntityLoadingProcess instance, or after creating the MLEntityLoadingProcess instance, the second apparatus may send the second indication information or the third indication information to the third apparatus when the value of progressStatus of the MLEntityLoadingProcess instance is RUNNING.

Optionally, the second apparatus may report a status of the first process to the first apparatus.

When the management mode for the deployment process is batch management, there may be one first process, and the identification information of the first process identifies a process instance that can represent the overall deployment process of the target model group.

In a possible implementation, the second apparatus may actively report the status of the first process to the first apparatus. The method further includes: The second apparatus sends first information, where the first information includes the first identification information and the status of the first process, or the identification information of the first process and the status of the first process. Correspondingly, the first apparatus receives the first information.

It should be understood that the first information is used to report the status of the first process; and the first identification information is associated with a message that carries the identification information of the target model group, and has a mapping relationship with the first process. Therefore, the second apparatus can identify the first process by using the first identification information or the identification information of the first process. The status of the first process may include: running, canceling, canceled, suspended, or finished.

In another possible implementation, the second apparatus may report the status of the first process to the first apparatus in response to a first request of the first apparatus. Specifically, before the second apparatus sends the first information, the second apparatus receives the first request from the first apparatus, where the first request is used to request the status of the first process, and the first request includes the first identification information or the identification information of the first process.

Optionally, the first apparatus may control the first process. In a possible implementation, the method further includes: The first apparatus sends second information, where the second information is used to control the overall deployment process of the target model group, the second information includes the first identification information and a control instruction for the first process, or the identification information of the first process and a control instruction, and the control instruction includes cancel, suspend, or start. Correspondingly, the second apparatus receives the second information.

In this embodiment of this application, in a model deployment mode of batch management, there may be one first process. The second apparatus may maintain only one MLEntityLoadingProcess instance, to deploy the target model group. The target model group may be used as a whole in processes of requesting and reporting the status of the first process. The target model group may also be controlled as a whole in a control process of the first process. Information about each model in the target model group does not need to be carried. In this way, signaling overheads between apparatuses are reduced, to help improve deployment efficiency of the target model group.

### Second manner: independent management

"Independent management" may be understood as performing deployment process management on an independent process created for each model included in the target model group. In some examples, the plurality of models may be sequentially deployed in the deployment process of the target model group, that is, the plurality of models in the trained target model group are sequentially deployed in the target inference function. In some other examples, the plurality of models may be simultaneously deployed in the deployment process of the target model group, that is, the plurality of models in the trained target model group are simultaneously deployed in the target inference function. A deployment sequence of the plurality of models in the target model group is not specifically limited in this application.

In this case, the first process includes a plurality of processes, the plurality of processes respectively correspond to the deployment processes of the plurality of models in the target model group, and the identification information of the first process includes a plurality of pieces of identification information corresponding to the plurality of processes. For example, the second apparatus creates a plurality of MLEntityLoadingProcess instances to manage the deployment process of the target model group, and the plurality of MLEntityLoadingProcess instances respectively correspond to the plurality of models in the target model group.

When the management mode for the deployment process is independent management, the second apparatus may report the status of the first process to the first apparatus by using the first identification information and identification information of a model in the target model group to identify a deployment process of the model or by using identification information of a process to identify a deployment process of the process.

In a possible implementation, the second apparatus actively sends third information, where the third information is used to report statuses of all or part of the plurality of processes, and the third information includes the first identification information, identification information of each model corresponding to all or part of the plurality of processes, and statuses of all or part of the processes; or identification information of all or part of the processes, and statuses of all or part of the processes.

In another possible implementation, the second apparatus may report statuses of all or part of the plurality of processes to the first apparatus in response to a second request of the first apparatus. Specifically, before the second apparatus sends the third information, the second apparatus receives the second request from the first apparatus. The second request is used to request the statuses of all or part of the plurality of processes. The second request includes the first identification information, identification information of each model corresponding to all or part of the plurality of processes, or identification information of all or part of the processes.

Optionally, the first apparatus may control, based on the control instruction, a plurality of processes included in the first process. In a possible implementation, the method further includes: The first apparatus sends fourth information, where the fourth information is used to control deployment processes of all or part of the plurality of models, and the fourth information includes the first identification information, the identification information of each model in all or part of the models, and a control instruction for a deployment process of each model in all or part of the models; or identification information of a deployment process of each model in all or part of the models, and the control instruction.

In this embodiment of this application, in a model deployment mode with independent management, the first process may include a plurality of processes, the plurality of processes are in a one-to-one correspondence with identification information of each of the plurality of models, and the plurality of processes respectively correspond to deployment processes of the plurality of models. In this way, the first apparatus can separately obtain and control deployment statuses of the models in the target model group, to reflect different deployment statuses of the models. When some models in the target model group fail to be deployed, the models that fail to be deployed may be determined, and these models may be deployed again based on their identification information. There is no need to deploy an entire target model group again. This helps improve management accuracy and reduce unnecessary resource waste.

In a possible implementation, the management mode for the deployment process of the target model group is a default manner, and the default manner includes batch management or independent management, that is, no explicit indication needs to be provided by any party. Optionally, the management mode for the deployment process may be agreed on in a protocol. This is not limited in this application.

In another possible implementation, the management mode for the deployment process of the target model group is indicated by the first apparatus. An implementation may be as follows: The first apparatus sends first indication information to the second apparatus, where the first indication information indicates the management mode for the deployment process of the target model group.

Optionally, the first indication information may be indicated by a value of the attribute groupBatchIndicator. In the scenario 1, the first indication information may be indicated by the value of the attribute groupBatchIndicator of the MLEntityLoadingRequest object. In the scenario 2, the first indication information may be indicated by the value of the attribute groupBatchIndicator of the MLEntityLoadingPolicy object. However, this is not limited in this application.

Optionally, the value of the first indication information groupBatchIndicator may include 0 and 1. When the value is 0, it indicates that the management mode for the deployment process of the target model group is batch management. When the value is 1, it indicates that the management mode for the deployment process of the target model group is independent management. The value of groupBatchIndicator and a meaning of the value are not specifically limited in this application.

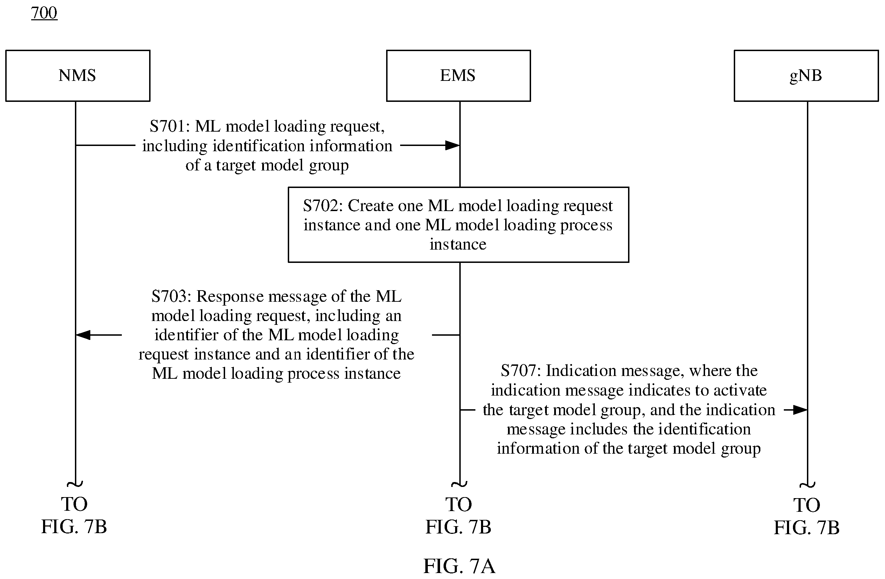

The following uses an example in which the first apparatus in FIG. 6 is an NMS, the second apparatus is an EMS, and the third apparatus that undertakes the model inference function is a gNB to describe in detail the following four cases with reference to FIG. 7A to FIG. 10B for the scenario 1, the scenario 2, and the two management modes of the deployment process of batch management and independent management.

### First case: Scenario 1+Batch management

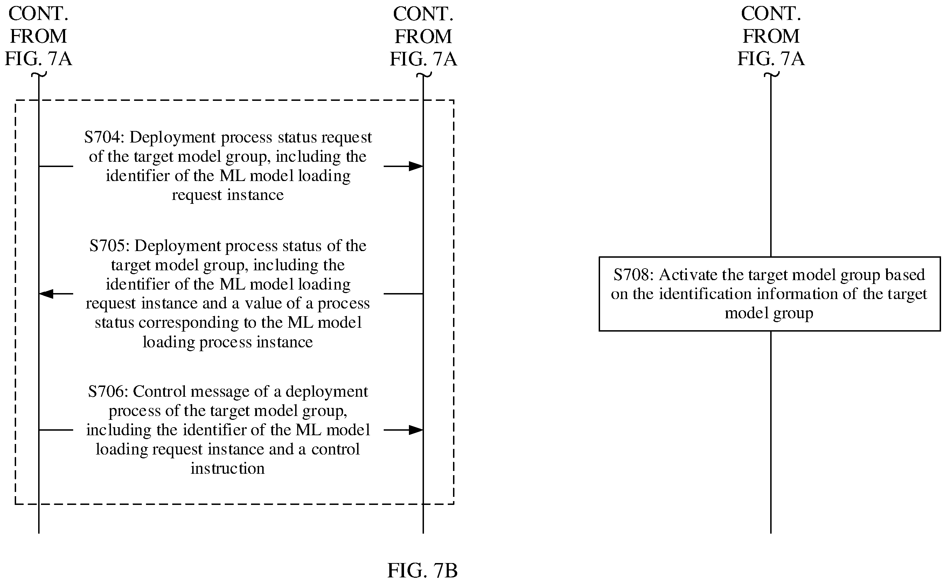

FIG. 7A and FIG. 7B are a schematic flowchart of a model deployment method 700 according to an embodiment of this application. The method 700 includes the following steps.

S701: When determining that a deployment policy of a target model group has been met, an NMS sends MLEntityLoadingRequest to an EMS, where MLEntityLoadingRequest includes identification information of the target model group. Correspondingly, the EMS receives MLEntityLoadingRequest.

Optionally, MLEntityLoadingRequest further includes identification information of each model in the target model group.

In a possible implementation, corresponding to the design 1, the identification information of the target model group may be indicated by MLEntityCoordinationGroup associated with MLEntityLoadingRequest. Optionally, the identification information of each model in the target model group may be further indicated by a value of an attribute related to role memberMLEntityRefList of the MLEntityCoordinationGroup object.

In another possible implementation, corresponding to the design 2, the identification information of the target model group may be indicated by an attribute mLEntityGroupInfo of the MLEntityLoadingRequest object. Optionally, the identification information of each model in the target model group may be correspondingly represented by using a plurality of values of an attribute related to role mLEntityToLoadRef of the MLEntityLoadingRequest object.

S702: The EMS creates one MLEntityLoadingRequest instance and one MLEntityLoadingProcess instance.

It should be understood that the MLEntityLoadingProcess instance created in S702 corresponds to an overall deployment process of the target model group, that is, a plurality of models in the target model group are deployed and managed as a whole.

It should be further understood that the management mode for the deployment process of the target model group may be default, or may be indicated by the NMS. When the management mode is indicated by the NMS, indication information may be indicated by groupBatchIndicator included in MLEntityLoadingRequest. In this embodiment, groupBatchIndicator indicates that the management mode for the deployment process of the target model group is batch management.

S703: The EMS sends a response message of MLEntityLoadingRequest to the NMS, where the response message includes an identifier of the MLEntityLoadingRequest instance and an identifier of the MLEntityLoadingProcess instance. Correspondingly, the NMS receives the response message.

S704: The NMS sends a deployment process status request of the target model group to the EMS, where the deployment process status request includes the identifier of the MLEntityLoadingRequest instance. Correspondingly, the EMS receives the request.

In another implementation of S704, the deployment process status request, sent by the NMS to the EMS, of the target model group includes the identifier of the MLEntityLoadingProcess instance.

S705: The EMS reports a deployment process status of the target model group to the NMS, where the deployment process status includes the identifier of the MLEntityLoadingRequest instance and a value of progressStatus corresponding to the MLEntityLoadingProcess instance. Correspondingly, the NMS receives the deployment process status of the target model group.

In another implementation of S705, the EMS reports a deployment process status of the target model group to the NMS, where the deployment process status includes the identifier of the MLEntityLoadingProcess instance and a value of progressStatus corresponding to the MLEntityLoadingProcess instance.

S706: The NMS sends a control message of the deployment process of the target model group to the EMS, where the control message includes the identifier of the MLEntityLoadingRequest instance and a control instruction. Correspondingly, the EMS executes the control instruction.

In another implementation of S706, the control message, sent by the NMS to the EMS, of the deployment process of the target model group includes the identifier of the MLEntityLoadingProcess instance and the control instruction.

S707: The EMS sends an indication message to a gNB, where the indication message indicates to activate the target model group, and the indication message includes the identification information of the target model group. Correspondingly, the gNB receives the indication message.

It should be understood that S707 may be understood as a process in which the EMS performs model deployment and loads the target model group to a target gNB. Optionally, there may be one or more target gNBs. This is not limited in this application.

Optionally, the indication message may be the foregoing second indication message or third indication message. This is not limited in this application.

S708: The gNB activates the target model group based on the identification information of the target model group.

In a possible implementation, after S708, the method 700 further includes: The gNB executes an inference function based on the target model group.

It should be understood that S704, S705, and S706 are all optional steps.

In this embodiment of this application, MLEntityLoadingRequest includes the identification information of the target model group, to indicate that current model deployment is for one model group, so that the gNB can obtain a description file about the target model group based on the identification information of the target model group in the deployment process. Therefore, joint inference can be implemented for a plurality of models in the activated target model group. In addition, the EMS maintains an MLEntityLoadingProcess instance for the model group, and traces, by using the instance, a process in which the gNB activates the target model group, to save energy and improve model deployment efficiency.

### Second case: Scenario 1+Independent management

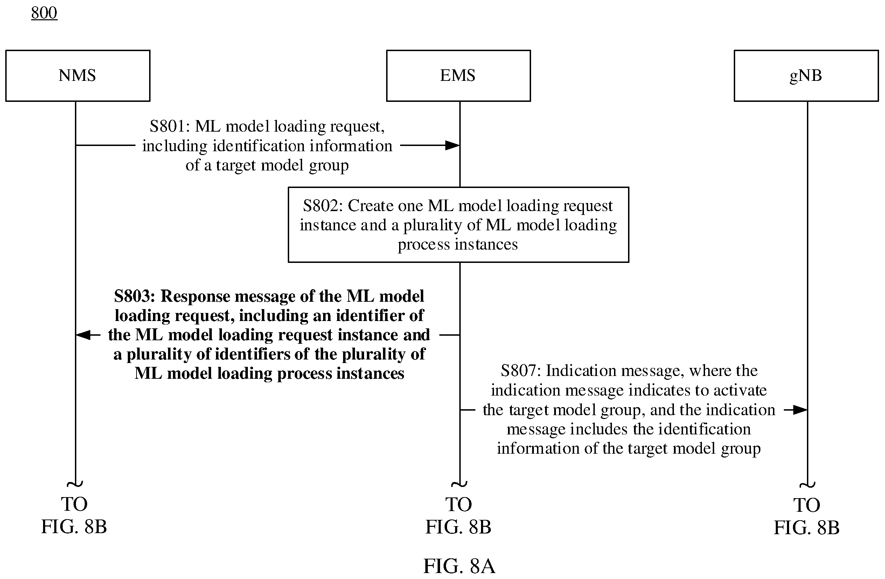

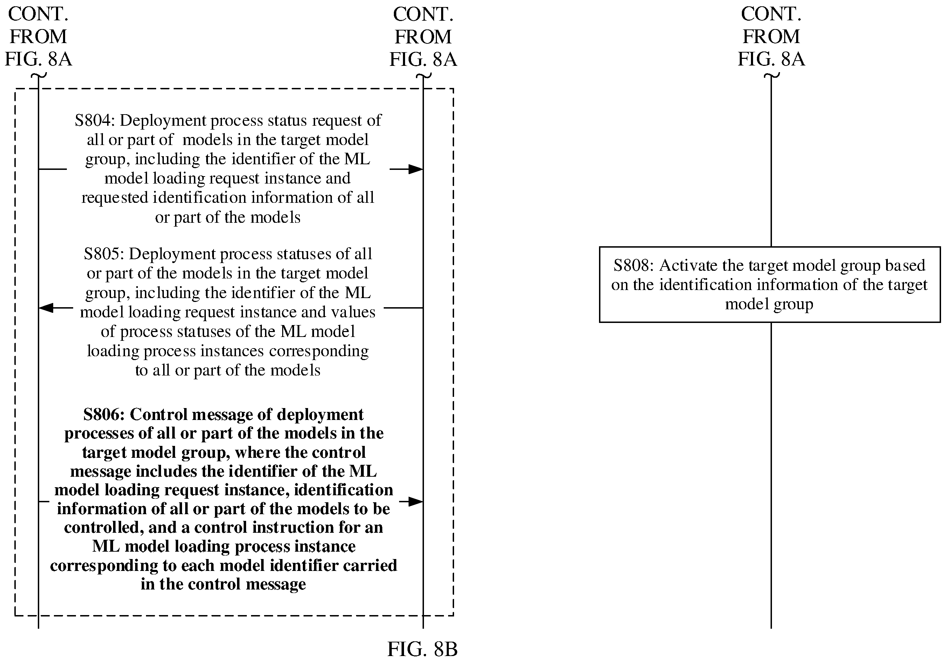

FIG. 8A and FIG. 8B are a schematic flowchart of a model deployment method 800 according to an embodiment of this application. The method 800 includes the following steps.

S801: When determining that a deployment policy of a target model group has been met, an NMS sends MLEntityLoadingRequest to an EMS, where MLEntityLoadingRequest includes identification information of the target model group. Correspondingly, the EMS receives MLEntityLoadingRequest.

Optionally, MLEntityLoadingRequest further includes identification information of each model in the target model group.

It should be understood that a manner of indicating the identification information of the target model group and the identification information of each model in the target model group in the method 800 may be the same as that in the method 700. Details are not described herein again.

S802: The EMS creates one MLEntityLoadingRequest instance and a plurality of MLEntityLoadingProcess instances.

It should be understood that the plurality of MLEntityLoadingProcess instances are in a one-to-one correspondence with a plurality of models in the target model group.

It should be further understood that a management mode for a deployment process of the target model group may be default, or may be indicated by the NMS. When the management mode is indicated by the NMS, indication information may be indicated by groupBatchIndicator included in MLEntityLoadingRequest. In this embodiment, groupBatchIndicator indicates that the management mode for the deployment process of the target model group is independent management.

S803: The EMS sends a response message of MLEntityLoadingRequest to the NMS, where the response message includes an identifier of the MLEntityLoadingRequest instance and a plurality of identifiers of the plurality of MLEntityLoadingProcess instances. Correspondingly, the NMS receives the response message.

S804: The NMS sends a deployment process status request of all or part of models in the target model group to the EMS, where the deployment process status request includes the identifier of the MLEntityLoadingRequest instance and requested identification information of all or part of the models. Correspondingly, the EMS receives the request.

In another implementation of S804, the deployment process status request, sent by the NMS to the EMS, of the target model group includes all or part of identification information of the MLEntityLoadingProcess instance.

S805: The EMS reports deployment process statuses of all or part of the models in the target model group to the NMS, where the deployment process statuses include the identifier of the MLEntityLoadingRequest instance and values of progressStatus of MLEntityLoadingProcess instances corresponding to all or part of the models. Correspondingly, the NMS receives a deployment process status of the target model group.

In another implementation of S805, the EMS reports deployment process statuses of all or part of the models in the target model group to the NMS, where the deployment process statuses include the identifier of the MLEntityLoadingProcess instance and values of progressStatus of the MLEntityLoadingProcess instances corresponding to all or part of the models.

S806: The NMS sends a control message of deployment processes of all or part of the models in the target model group to the EMS, where the control message includes the identifier of the MLEntityLoadingRequest instance, identification information of all or part of the models to be controlled, and a control instruction for an MLEntityLoadingProcess instance corresponding to each model identifier. Correspondingly, the EMS executes the control instruction.

In another implementation of S806, the NMS sends a control message of the deployment process of the target model group to the EMS, where the control message includes the identifier of the MLEntityLoadingProcess instance and a control instruction for each MLEntityLoadingProcess instance.

S807: The EMS sends an indication message to a gNB, where the indication message indicates to activate the target model group, and the indication message includes the identification information of the target model group. Correspondingly, the gNB receives the indication message.

S808: The gNB activates the target model group based on the identification information of the target model group.

S804, S805, and S806 are all optional steps.

In this embodiment of this application, the deployment process of the target model group is independently managed. The NMS may obtain and control a deployment status of each model in the target model group. When some models in the target model group fail to be deployed, the models that fail to be deployed may be determined, and these models may be deployed again based on their identification information. There is no need to deploy an entire target model group again. This helps improve management accuracy and reduce unnecessary resource waste.

### Third case: Scenario 2+Batch management

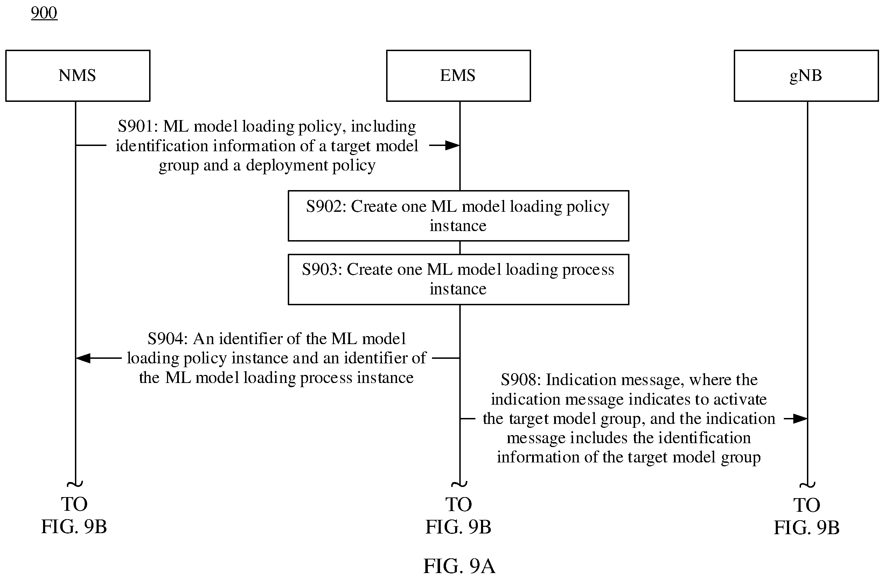

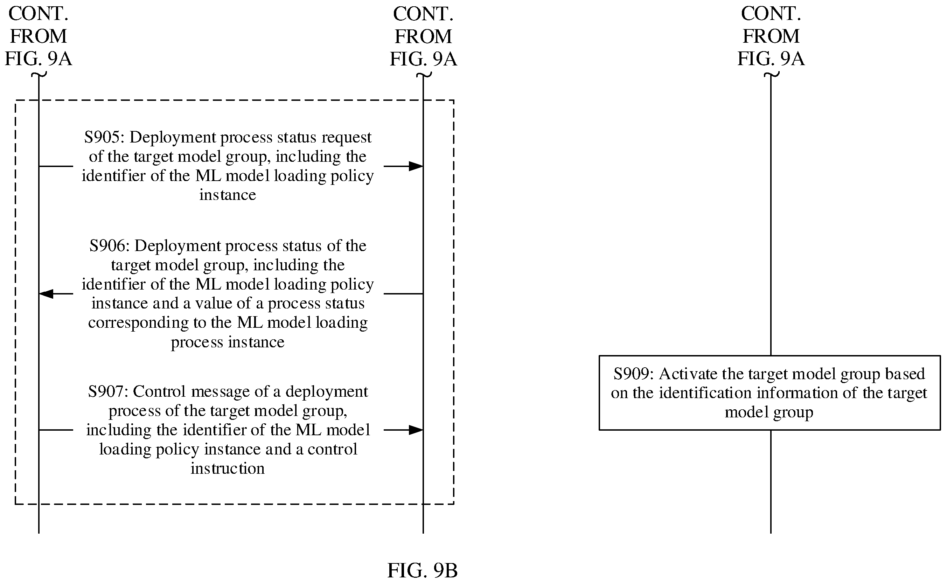

FIG. 9A and FIG. 9B are a schematic flowchart of a model deployment method 900 according to an embodiment of this application. The method 900 includes the following steps.

S901: An NMS sends MLEntityLoadingPolicy to an EMS, where MLEntityLoadingPolicy includes identification information of a target model group and a deployment policy of the target model group. Correspondingly, the EMS receives MLEntityLoadingPolicy.

Optionally, MLEntityLoadingPolicy further includes identification information of each model in the target model group.

In a possible implementation, corresponding to the design 1, the identification information of the target model group may be indicated by MLEntityCoordinationGroup associated with MLEntityLoadingPolicy. Optionally, the identification information of each model in the target model group may be indicated by a value of an attribute related to role memberMLEntityRefList of the MLEntityCoordinationGroup object; or identification information of a plurality of models in the target model group may be correspondingly represented by using a plurality of values of an mLEntityId attribute of the MLEntityLoadingPolicy object.

In another possible implementation, corresponding to the design 2, the identification information of the target model group may be indicated by an attribute mLEntityGroupInfo of the MLEntityLoadingPolicy object.

Optionally, the identification information of the plurality of models in the target model group may be correspondingly indicated by a plurality of values of the mLEntityId attribute of the MLEntityLoadingPolicy object.

S902: The EMS creates one MLEntityLoadingPolicy instance.

When the EMS determines that the deployment policy of the target model group has been met, the EMS performs S903.

S903: The EMS creates one MLEntityLoadingProcess instance.

It should be understood that the MLEntityLoadingProcess instance created by the EMS in S903 corresponds to an overall deployment process of the target model group, that is, a plurality of models in the target model group are deployed and managed as a whole.

It should be further understood that a management mode for a deployment process of the target model group may be default, or may be indicated by the NMS. When the management mode is indicated by the NMS, indication information may be indicated by groupBatchIndicator included in MLEntityLoadingPolicy. In this embodiment, groupBatchIndicator indicates that the management mode for the deployment process of the target model group is batch management.

S904: The EMS sends an identifier of the MLEntityLoadingPolicy instance and an identifier of the MLEntityLoadingProcess instance to the NMS. Correspondingly, the NMS receives the identifier of the MLEntityLoadingPolicy instance and the identifier of the MLEntityLoadingProcess instance.

Optionally, the EMS may send the identifier of the MLEntityLoadingPolicy instance to the NMS after performing S902, or may send the identifier of the MLEntityLoadingPolicy instance to the NMS after performing S903. The identifier of the MLEntityLoadingPolicy instance and the identifier of the MLEntityLoadingProcess instance may be carried in a same message, or may be carried in different messages. This is not limited in this application.

S905: The NMS sends a deployment process status request of the target model group to the EMS, where the deployment process status request includes the identifier of the MLEntityLoadingPolicy instance. Correspondingly, the EMS receives the request.

In another implementation of S905, the deployment process status request, sent by the NMS to the EMS, of the target model group includes the identifier of the MLEntityLoadingProcess instance.

S906: The EMS reports a deployment process status of the target model group to the NMS, where the deployment process status includes the identifier of the MLEntityLoadingPolicy instance and a value of progressStatus corresponding to the MLEntityLoadingProcess instance. Correspondingly, the NMS receives the deployment process status of the target model group.

In another implementation of S906, the EMS reports the deployment process status of the target model group to the NMS, where the deployment process status includes the identifier of the MLEntityLoadingProcess instance and a value of progressStatus corresponding to the MLEntityLoadingProcess instance.

S907: The NMS sends a control message of the deployment process of the target model group to the EMS, where the control message includes the identifier of the MLEntityLoadingPolicy instance and a control instruction. Correspondingly, the EMS executes the control instruction.

In another implementation of S907, the control message, sent by the NMS to the EMS, of the deployment process of the target model group includes the identifier of the MLEntityLoadingProcess instance and the control instruction.

S908: The EMS sends an indication message to a gNB, where the indication message indicates to activate the target model group, and the indication message includes the identification information of the target model group. Correspondingly, the gNB receives the indication message.

It should be understood that S908 may be understood as a process in which the EMS performs model deployment and loads the target model group to a target gNB. Optionally, there may be one or more target gNBs. This is not limited in this application.

Optionally, the indication message may be the foregoing second indication message or third indication message. This is not limited in this application.

S909: The gNB activates the target model group based on the identification information of the target model group.

In a possible implementation, after S909, the method 900 further includes: The gNB executes an inference function based on the target model group.

It should be understood that S905, S906, and S907 are all optional steps.

Beneficial effects of this embodiment of this application are similar to those of the method 700. Details are not described again.

### Fourth case: Scenario 2+Independent management

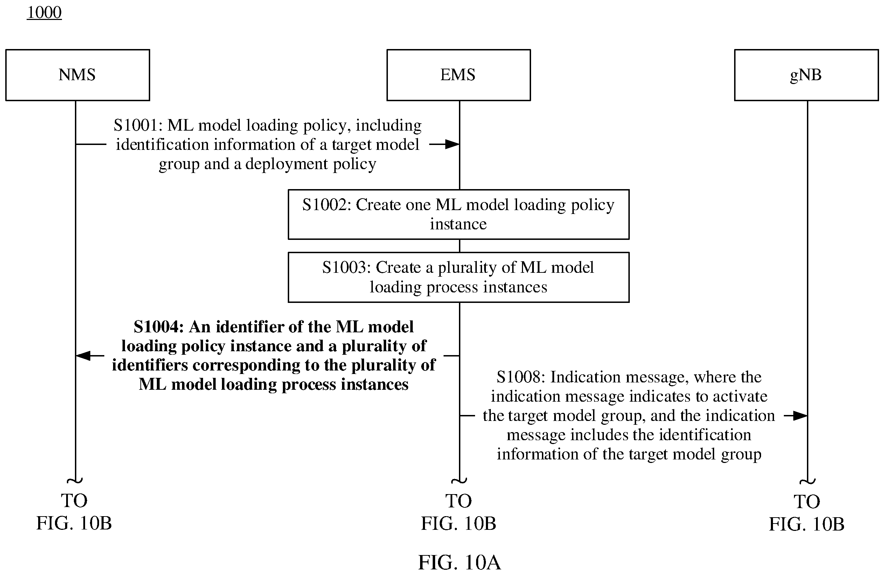

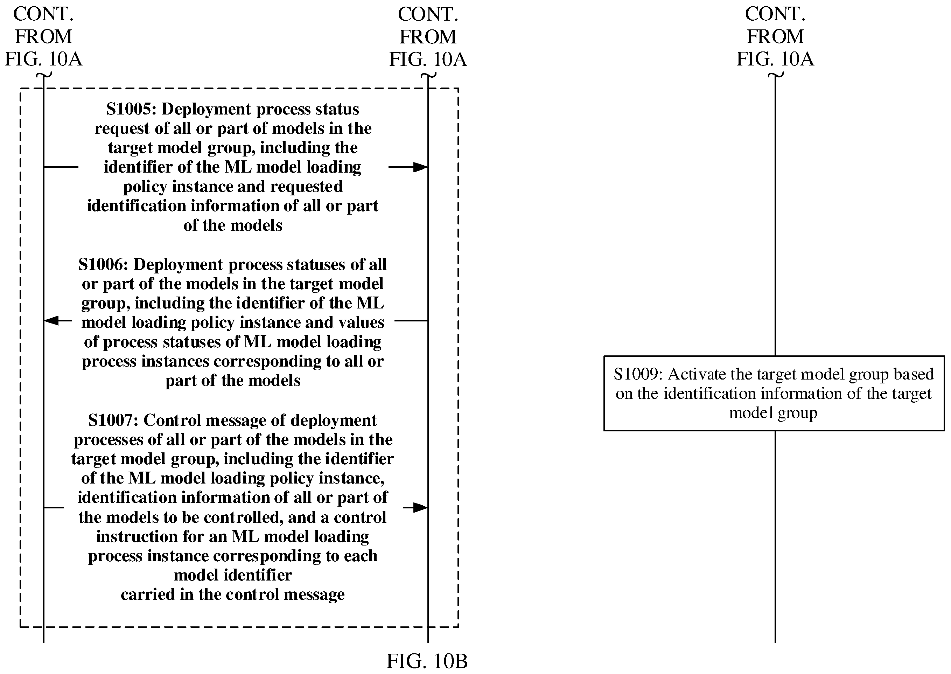

FIG. 10A and FIG. 10B are a schematic flowchart of a model deployment method 1000 according to an embodiment of this application. The method 1000 includes the following steps.

S1001: An NMS sends MLEntityLoadingPolicy to an EMS, where MLEntityLoadingPolicy includes identification information of a target model group and a deployment policy of the target model group. Correspondingly, the EMS receives MLEntityLoadingPolicy.

Optionally, MLEntityLoadingPolicy further includes identification information of each model in the target model group.

It should be understood that a manner of indicating the identification information of the target model group and the identification information of each model in the target model group in the method 1000 may be the same as that in the method 900. Details are not described herein again.

S1002: The EMS creates one MLEntityLoadingPolicy instance.

When the EMS determines that the deployment policy of the target model group has been met, the EMS performs S1003.

S1003: The EMS creates a plurality of MLEntityLoadingProcess instances.

It should be understood that the plurality of MLEntityLoadingProcess instances are in a one-to-one correspondence with a plurality of models in the target model group.

It should be further understood that a management mode for a deployment process of the target model group may be default, or may be indicated by the NMS. When the management mode is indicated by the NMS, indication information may be indicated by groupBatchIndicator included in MLEntityLoadingPolicy. In this embodiment, groupBatchIndicator indicates that the management mode for the deployment process of the target model group is independent management.

S1004: The EMS sends an identifier of the MLEntityLoadingPolicy instance and a plurality of identifiers corresponding to the plurality of MLEntityLoadingProcess instances to the NMS. Correspondingly, the NMS receives the message.

Optionally, the EMS may send the identifier of the MLEntityLoadingPolicy instance to the NMS after performing S1002, or may send the identifier of the MLEntityLoadingPolicy instance to the NMS after performing S1003. The identifier of the MLEntityLoadingPolicy instance and the plurality of identifiers of the plurality of MLEntityLoadingProcess instances may be carried in a same message, or may be carried in different messages. This is not limited in this application.

S1005: The NMS sends a deployment process status request of all or part of models in the target model group to the EMS, where the deployment process status request includes the identifier of the MLEntityLoadingPolicy instance and requested identification information of all or part of the models. Correspondingly, the EMS receives the request.

In another implementation of S1005, the deployment process status request, sent by the NMS to the EMS, of the target model group includes all or part of identification information of the MLEntityLoadingProcess instance.

S1006: The EMS reports deployment process statuses of all or part of the models in the target model group to the NMS, where the deployment process statuses include the identifier of the MLEntityLoadingPolicy instance and values of progressStatus of MLEntityLoadingProcess instances corresponding to all or part of the models. Correspondingly, the NMS receives a deployment process status of the target model group.

In another implementation of S1006, the EMS reports deployment process statuses of all or part of the models in the target model group to the NMS, where the deployment process statuses include the identifier of the MLEntityLoadingProcess instance and values of progressStatus of the MLEntityLoadingProcess instances corresponding to all or part of the models.

S1007: The NMS sends a control message of deployment processes of all or part of the models in the target model group to the EMS, where the control message includes the identifier of the MLEntityLoadingPolicy instance, identification information of all or part of the models to be controlled, and a control instruction for an MLEntityLoadingProcess instance corresponding to each model identifier. Correspondingly, the EMS executes the control instruction.

In another implementation of S1007, the NMS sends a control message of the deployment process of the target model group to the EMS, where the control message includes the identifier of the MLEntityLoadingProcess instance and a control instruction for each MLEntityLoadingProcess instance.

S1008: The EMS sends an indication message to a gNB, where the indication message indicates to activate the target model group, and the indication message includes the identification information of the target model group. Correspondingly, the gNB receives the indication message.

S1009: The gNB activates the target model group based on the identification information of the target model group.

S1005, S1006, and S1007 are all optional steps.

Beneficial effects of this embodiment of this application are similar to those of the method 800. Details are not described again.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

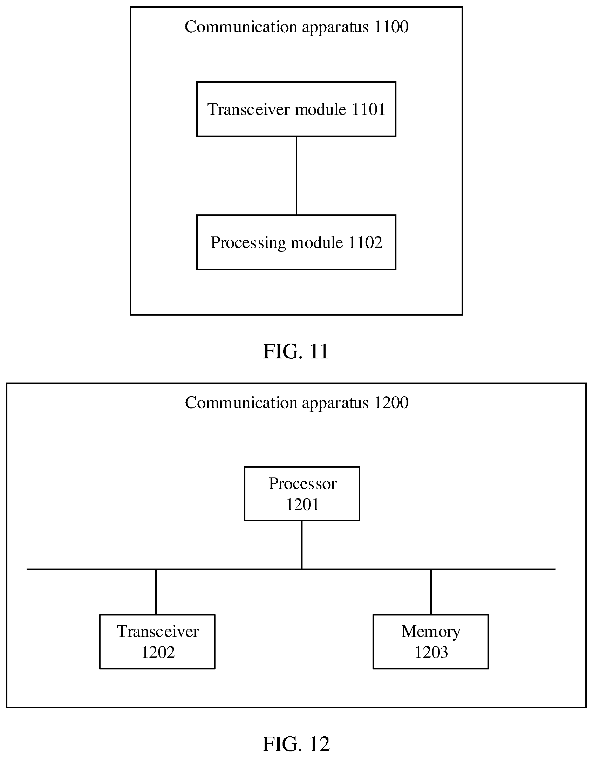

The foregoing describes in detail the model deployment method in embodiments of this application with reference to FIG. 6 to FIG. 10B. The following describes in detail a communication apparatus in embodiments of this application with reference to FIG. 11 and FIG. 12.

FIG. 11 shows a communication apparatus 1100 according to an embodiment of this application. The communication apparatus 1100 includes a transceiver module 1101 and a processing module 1102.

In a possible implementation, the communication apparatus 1100 is configured to implement the steps and the procedure corresponding to the second apparatus.

The transceiver module 1101 is configured to receive identification information of a target model group, where the target model group includes a plurality of models, and the plurality of models are jointly trained and/or jointly tested. The processing module 1102 is configured to deploy the target model group based on the identification information of the target model group.

Optionally, the transceiver module 1101 is further configured to send first identification information and identification information of a first process, where the first identification information is associated with a message that carries the identification information of the target model group, the first identification information has a mapping relationship with the first process, and the first process is used to manage a deployment process of the target model group.

Optionally, the transceiver module 1101 is further configured to receive first indication information, where the first indication information indicates the management mode for the deployment process of the target model group.

Optionally, a management mode for the deployment process of the target model group is batch management.

Optionally, a management mode for the deployment process of the target model group is batch management by default.

Optionally, the first process corresponds to an overall deployment process of the target model group.

Optionally, the transceiver module 1101 is further configured to send first information, where the first information includes the first identification information and a status of the first process, or the identification information of the first process and a status of the first process, and the status includes: running, canceling, canceled, suspended, or finished.

Optionally, the transceiver module 1101 is further configured to receive second information, where the second information is used to control the overall deployment process of the target model group, the second information includes the first identification information and a control instruction for the first process, or the identification information of the first process and the control instruction, and the control instruction includes: cancel, suspend, or start.

Optionally, a management mode for the deployment process of the target model group is independent management by default.

Optionally, a management mode for the deployment process of the target model group is independent management.

Optionally, the first process includes a plurality of processes, the plurality of processes are in a one-to-one correspondence with identification information of each of the plurality of models, the plurality of processes respectively correspond to deployment processes of the plurality of models, and the identification information of the first process includes a plurality of pieces of identification information corresponding to the plurality of processes.

Optionally, the transceiver module 1101 is further configured to send third information, where the third information includes the first identification information, identification information of each model corresponding to all or part of the plurality of processes, and respective statuses of all or part of the processes; or
identification information of all or part of processes, and respective statuses of all or part of the processes, where the status includes: running, canceling, canceled, suspended, or finished.

Optionally, the transceiver module 1101 is further configured to receive fourth information, where the fourth information is used to control deployment processes of all or part of the plurality of models, and the fourth information includes the first identification information, the identification information of each model in all or part of the models, and a control instruction for a deployment process of each model in all or part of the models; or identification information of a deployment process of each model in all or part of the models, and the control instruction.

Optionally, the identification information of the target model group is sent via a request message or a configuration message.

Optionally, the transceiver module 1101 is further configured to receive identification information of each model in the target model group.

In another possible implementation, the communication apparatus 1100 is configured to implement the steps and the procedure corresponding to the first apparatus.

The processing module 1102 is configured to determine identification information of a target model group, where the target model group includes a plurality of models, and the plurality of models are jointly trained and/or jointly tested. The transceiver module 1101 is configured to send the identification information of the target model group.

Optionally, the transceiver module 1101 is further configured to receive first identification information and identification information of a first process, where the first identification information is associated with a message that carries the identification information of the target model group, the first identification information has a mapping relationship with the first process, and the first process is used to manage a deployment process of the target model group.

Optionally, the transceiver module 1101 is further configured to send first indication information, where the first indication information indicates the management mode for the deployment process of the target model group.

Optionally, a management mode for the deployment process of the target model group is batch management.

Optionally, a management mode for the deployment process of the target model group is batch management by default.

Optionally, the first process corresponds to an overall deployment process of the target model group.

Optionally, the transceiver module 1101 is further configured to receive first information, where the first information includes the first identification information and a status of the first process, or the identification information of the first process and a status of the first process, and the status includes: running, canceling, canceled, suspended, or finished.

Optionally, the transceiver module 1101 is further configured to send second information, where the second information is used to control the overall deployment process of the target model group, the second information includes the first identification information and a control instruction for the first process, or the identification information of the first process and the control instruction, and the control instruction includes: cancel, suspend, or start.

Optionally, a management mode for the deployment process of the target model group is independent management by default.

Optionally, a management mode for the deployment process of the target model group is independent management.

Optionally, the first process includes a plurality of processes, the plurality of processes are in a one-to-one correspondence with identification information of each of the plurality of models, the plurality of processes respectively correspond to deployment processes of the plurality of models, and the identification information of the first process includes a plurality of pieces of identification information corresponding to the plurality of processes.

Optionally, the transceiver module 1101 is further configured to receive third information, where the third information includes the first identification information, identification information of each model corresponding to all or part of the plurality of processes, and respective statuses of all or part of the processes; or identification information of all or part of processes, and respective statuses of all or part of the processes, where the status includes: running, canceling, canceled, suspended, or finished.

Optionally, the transceiver module 1101 is further configured to send fourth information, where the fourth information is used to control deployment processes of all or part of the plurality of models, and the fourth information includes the first identification information, the identification information of each model in all or part of the models, and a control instruction for a deployment process of each model in all or part of the models; or identification information of a deployment process of each model in all or part of the models, and the control instruction.

Optionally, the identification information of the target model group is sent via a request message or a configuration message.

Optionally, the transceiver module 1101 is further configured to send identification information of each model in the target model group.

It should be understood that the apparatus 1100 herein is represented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. In an optional example, a person skilled in the art may understand that the apparatus 1100 may be specifically the first apparatus or the second apparatus in the foregoing embodiments, or functions described in the foregoing embodiments may be integrated into the apparatus 1100. The apparatus 1100 may be configured to perform the procedure and/or the steps corresponding to the first apparatus or the second apparatus in the foregoing method embodiments. To avoid repetition, details are not described herein again.

The apparatus 1100 has a function for implementing the corresponding steps performed by the first apparatus or the second apparatus in the foregoing method. The function may be implemented by hardware, or may be implemented by executing corresponding software by hardware. The hardware or the software includes one or more modules corresponding to the function.

In embodiments of this application, the apparatus 1100 in FIG. 11 may alternatively be a chip or a chip system, for example, a system on a chip (system on a chip, SoC).

FIG. 12 is a block diagram of a communication apparatus 1200 according to an embodiment of this application. The apparatus 1200 includes a processor 1201, a transceiver 1202, and a memory 1203. The processor 1201, the transceiver 1202, and the memory 1203 communicate with each other through an internal connection path. The memory 1203 is configured to store instructions. The processor 1201 is configured to execute the instructions stored in the memory 1203, to control the transceiver 1202 to send a signal and/or receive a signal.

It should be understood that the apparatus 1200 may be specifically the first apparatus or the second apparatus in the foregoing embodiments, and may be configured to perform the steps and/or the procedure corresponding to the first apparatus or the second apparatus in the foregoing method embodiments. Optionally, the memory 1203 may include a read-only memory and a random access memory, and provide instructions and data for the processor. A part of the memory may further include a non-volatile random access memory. For example, the memory may further store information of a device type. The processor 1201 may be configured to execute the instructions stored in the memory. When the processor 1201 executes the instructions stored in the memory, the processor 1201 is configured to perform the steps and/or the procedures in the foregoing method embodiments. The transceiver 1202 may include a transmitter and a receiver. The transmitter may be configured to implement the steps and/or the procedure corresponding to the transceiver for performing a sending action. The receiver may be configured to implement the steps and/or the procedures corresponding to the transceiver for performing a receiving action.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable storage medium. The computer-readable storage medium is configured to store a computer program, and the computer program is used to implement the method shown in the foregoing method embodiments.

This application further provides a computer program product. The computer program product includes computer program code (which may also be referred to as a computer program or instructions). When the computer program is run on a computer, the computer may perform the method shown in the foregoing method embodiments.

This application further provides a communication method, applied to a communication system including a first apparatus and a second apparatus. The first apparatus and/or the second apparatus perform/performs the method shown in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. All or part of the units may be selected according to actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, a part of the technical solutions in this application may be implemented in a form of a software product. The computer software product is stored in a storage medium and includes several instructions for instructing a computer device (which may be a personal computer, a server, a network device, or the like) to perform all or part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A model deployment method, comprising:
receiving identification information of a target model group, wherein the target model group comprises a plurality of models, and the plurality of models are jointly trained and/or jointly tested; and
deploying the target model group based on the identification information of the target model group.

2. The method according to claim 1, wherein the method further comprises:
sending first identification information and identification information of a first process, wherein the first identification information is associated with a message that carries the identification information of the target model group, the first identification information has a mapping relationship with the first process, and the first process is used to manage a deployment process of the target model group.

3. The method according to claim 2, wherein a management mode for the deployment process of the target model group is batch management.

4. The method according to claim 3, wherein the first process corresponds to an overall deployment process of the target model group.

5. The method according to claim 3 or 4, wherein the method further comprises:
sending first information, wherein the first information comprises the first identification information and a status of the first process, or the identification information of the first process and a status of the first process, and the status comprises: running, canceling, canceled, suspended, or finished.

6. The method according to any one of claims 3 to 5, wherein the method further comprises:
receiving second information, wherein the second information is used to control the overall deployment process of the target model group, the second information comprises the first identification information and a control instruction for the first process, or the identification information of the first process and the control instruction, and the control instruction comprises: cancel, suspend, or start.

7. The method according to claim 2, wherein a management mode for the deployment process of the target model group is independent management.

8. The method according to claim 7, wherein the first process comprises a plurality of processes, the plurality of processes are in a one-to-one correspondence with identification information of each of the plurality of models, the plurality of processes respectively correspond to deployment processes of the plurality of models, and the identification information of the first process comprises a plurality of pieces of identification information corresponding to the plurality of processes.

9. The method according to claim 7 or 8, wherein the method further comprises:
sending third information, wherein the third information comprises the first identification information, identification information of each model corresponding to all or part of the plurality of processes, and respective statuses of all or part of the processes; or
identification information of all or part of processes, and respective statuses of all or part of the processes, wherein the status comprises: running, canceling, canceled, suspended, or finished.

10. The method according to any one of claims 7 to 9, wherein the method further comprises:
receiving fourth information, wherein the fourth information is used to control deployment processes of all or part of the plurality of models, and the fourth information comprises the first identification information, the identification information of each model in all or part of the models, and a control instruction for a deployment process of each model in all or part of the models; or
the identification information of a deployment process of each model in all or part of the models, and the control instruction.

11. The method according to any one of claims 1 to 10, wherein the method further comprises:
receiving first indication information, wherein the first indication information indicates the management mode for the deployment process of the target model group.

12. The method according to any one of claims 3 to 6, wherein the management mode for the deployment process of the target model group is batch management by default.

13. The method according to any one of claims 7 to 10, wherein the management mode for the deployment process of the target model group is independent management by default.

14. The method according to any one of claims 1 to 13, wherein the identification information of the target model group is sent via a request message or a configuration message.

15. The method according to any one of claims 1 to 14, wherein the method further comprises:
receiving identification information of each model in the target model group.

16. A model deployment method, comprising:
determining identification information of a target model group, wherein the target model group comprises a plurality of models, and the plurality of models are jointly trained and/or jointly tested; and
sending the identification information of the target model group.

17. The method according to claim 16, wherein the method further comprises:
receiving first identification information and identification information of a first process, wherein the first identification information is associated with a message that carries the identification information of the target model group, the first identification information has a mapping relationship with the first process, and the first process is used to manage a deployment process of the target model group.

18. The method according to claim 17, wherein a management mode for the deployment process of the target model group is batch management.

19. The method according to claim 18, wherein the first process corresponds to an overall deployment process of the target model group.

20. The method according to claim 18 or 19, wherein the method further comprises:
receiving first information, wherein the first information comprises the first identification information and a status of the first process, or the identification information of the first process and a status of the first process, and the status comprises: running, canceling, canceled, suspended, or finished.

21. The method according to any one of claims 17 to 19, wherein the method further comprises:
sending second information, wherein the second information is used to control the overall deployment process of the target model group, the second information comprises the first identification information and a control instruction for the first process, or the identification information of the first process and the control instruction, and the control instruction comprises: cancel, suspend, or start.

22. The method according to claim 17, wherein a management mode for the deployment process of the target model group is independent management.

23. The method according to claim 22, wherein the first process comprises a plurality of processes, the plurality of processes are in a one-to-one correspondence with identification information of each of the plurality of models, the plurality of processes respectively correspond to deployment processes of the plurality of models, and the identification information of the first process comprises a plurality of pieces of identification information corresponding to the plurality of processes.

24. The method according to claim 22 or 23, wherein the method further comprises:
receiving third information, wherein the third information comprises the first identification information, identification information of each model corresponding to all or part of the plurality of processes, and respective statuses of all or part of the processes; or
identification information of all or part of processes, and respective statuses of all or part of the processes, wherein the status comprises: running, canceling, canceled, suspended, or finished.

25. The method according to any one of claims 22 to 24, wherein the method further comprises:
sending fourth information, wherein the fourth information is used to control deployment processes of all or part of the plurality of models, and the fourth information comprises the first identification information, the identification information of each model in all or part of the models, and a control instruction for a deployment process of each model in all or part of the models; or
identification information of a deployment process of each model in all or part of the models, and the control instruction.

26. The method according to any one of claims 16 to 25, wherein the method further comprises:
sending first indication information, wherein the first indication information indicates the management mode for the deployment process of the target model group.

27. The method according to any one of claims 18 to 21, wherein the management mode for the deployment process of the target model group is batch management by default.

28. The method according to any one of claims 22 to 25, wherein the management mode for the deployment process of the target model group is independent management by default.

29. The method according to any one of claims 16 to 28, wherein the identification information of the target model group is sent via a request message or a configuration message.

30. The method according to any one of claims 16 to 29, wherein the method further comprises:
sending identification information of each model in the target model group.

31. A communication apparatus, comprising: a module configured to perform the method according to any one of claims 1 to 15, or a module configured to perform the method according to any one of claims 16 to 30.

32. A communication apparatus, comprising a processor, wherein the processor is coupled to a memory, the memory stores a computer executable instruction, and the processor executes the computer executable instruction stored in the memory, so that the processor performs the method according to any one of claims 1 to 15, or performs the method according to any one of claims 16 to 30.

33. A computer-readable storage medium, configured to store a computer program, wherein the computer program comprises instructions for implementing the method according to any one of claims 1 to 15, or instructions for implementing the method according to any one of claims 16 to 30.

34. A computer program product, wherein the computer program product comprises computer program code, and when the computer program code is run on a computer, the computer is enabled to implement the method according to any one of claims 1 to 15, or perform the method according to any one of claims 16 to 30.

35. A communication system, comprising: an apparatus configured to perform the method according to any one of claims 1 to 15, and/or an apparatus configured to perform the method according to any one of claims 16 to 30.

36. A communication method, applied to a communication system comprising a first apparatus and a second apparatus, wherein the method comprises: performing, by the second apparatus, the method according to any one of claims 1 to 15, and performing, by the first apparatus, the method according to any one of claims 16 to 30.
